Europäisches Patentamt

European Patent Office

Office européen des brevets

(11) Publication number: **0 396 774**
**A1**

## (12) EUROPEAN PATENT APPLICATION
### published in accordance with Art. 158(3) EPC

(21) Application number: 89911883.0

(22) Date of filing: 26.10.89

(86) International application number:
PCT/JP89/01100

(87) International publication number:
WO 90/04825 (03.05.90 90/10)

(51) Int. Cl.5: **G06F 3/06, G06F 3/08, G06F 12/14**

(30) Priority: 26.10.88 JP 268335/88
26.10.88 JP 268336/88
27.10.88 JP 269376/88
27.10.88 JP 269377/88
28.10.88 JP 270928/88

(43) Date of publication of application:
14.11.90 Bulletin 90/46

(84) Designated Contracting States:
DE FR GB

(71) Applicant: **Hitachi Maxell Ltd.**
**No 1-1-88, Ushitora Ibaraki-shi**
**Osaka-fu(JP)**

(72) Inventor: **SONOBE, Takeo**
**1-2-2-302, Togashira Toride-shi**
**Ibaraki 302(JP)**
Inventor: **YAMAUCHI, Satoru**
**1-2-2-501, Togashira Toride-shi**
**Ibaraki 302(JP)**

(74) Representative: **Williams, Trevor John et al**
**J.A. KEMP & CO. 14 South Square Gray's Inn**
**London WC1R 5LX(GB)**

(54) **METHOD AND APPARATUS FOR CONTROLLING RECORDING MEDIUM AND RECORDING MEDIUM PRODUCED UNDER THE CONTROL THEREOF.**

(57) A method in which the data are scrambled according to a scramble program and are recorded onto an IC card, an optical disc, a magnetic disc, or a magnetooptical disc together with the scramble program. The recorded data are reproduced and are reversely scrambled using a scramble program. The recording place of the scramble program in the recording medium may be selected by a user who effects the recording. It is made impossible to reproduce the directory that corresponds to data portion necessary for making it impossible to access the stored data except by specified users.

FIG. 1

5 DISPLAY UNIT

HOST COMPUTER

PARA. BUFFER

SCRAMBLE TABLE

4 IMAGE SCANNER

2 DISK DRIVE

3 PHOTO DISK

Xerox Copy Centre

TITLE MODIFIED
see front page

SPECIFICATION

APPARATUS FOR AND METHOD OF MANAGING RECORDING MEDIUM,

AND RECORDING MEDIUM MANUFACTURED UNDER MANAGEMENT

BASED ON THESE

1 TECHNICAL FIELD

The present invention relates to a method of managing data recorded on a recording medium such as an optical recording medium or a magnetic recording medium, and the recording medium. Also, the present invention relates to a data managing system suitable for an image data filing system or the like which utilizes a disk-like recording medium such as an optical disk or a magnetic disk, and the recording medium.

BACKGROUND ART

As a system utilizing a recording medium having large capacity such as an optical disk or a magnetic disk, a data filing system, in which many necessary items of data are recorded and managed on the recording medium, is well known. Such a data filing system has been utilized, in various application fields, for management of data such as personal data which only a predetermined person can use, for example.

As an example of the system for managing the personal data, there is a data management system for medical use, for example. In such a system, the personal data such as an X-ray photograph of a person, which is required to keep a secret of the personal data against another person, is filed. In addition, as a data filing system for keeping a secret of personal data, an IC card system is conventionally well known. In such an IC card system, an IC card accommodating a microcomputer and a memory is used, necessary data is stored in the memory and a secret identification number is stored in the microcomputer. The data can be read out from the memory by the microcomputer only when a secret identification number input from the outside of the system coincides with the secret identification number stored in the microcomputer.

Many files of image data are recorded on a disk-like recording medium (to be referred to as a disk in short hereinafter) which is used for an image data filing system and a requested image data file can be arbitrarily reproduced and displayed. In order that an arbitrarily designated file of image data may be designated and reproduced, an item of directory data including data representing a start address of a recording area of the image data file, data representing a data length of the image data file, data representing a name of the image data file, data representing date, and attribute data representing whether or not the image data file may be deleted is recorded in a data recording area on the disk in correspondence with the image data file, in addition to the image data file.

With such a disk, when a user designates a name of a desired file of the image data, the item of the directory data including the file name is read out from the disk and the start address data and the data length data for the image data file is detected from the directory data item. As a result, the desired image data file designated by the user is searched among many files of the image data and reproduced in accordance with the start address and data length data. Thus, in order to search many image data files for a desired image data file, an operation for designating a name of the desired image data file and an operation for reading out the directory data item corresponding to the image data file from the disk must be performed. For a purpose that items of the directory data can be simply read out, the items of the directory data are sequentially recorded on the data recording area from a start area in a head scanning direction. For example, in a photo disk, a head is generally scanned from an inner circle to an outer circle. Therefore, the items of the directory data are sequentially recorded on the data recording area from the start area of the inner circle.

In a disk used for an image data filing system, an information data area in which files of image data are recorded and a directory data area in which item of directory data are recorded provided in the data recording area and a size of each area is determined based on the system. As apparent from the above description, the directory data area is provided in a start area side of the data recording area in the head scanning direction. The files of the image data are sequentially recorded in the information data area from a start area in the head scanning direction.

In the above IC card system, it is determined in accordance with coincidence or noncoincidence of the secret identification number whether or not the microcomputer in the IC card can read out data from the memory. Therefore, a high level of secrecy can be maintained for the data stored in the memory. That is, the microcomputer as means for reading out the data from the memory is accommodated in the IC card together with the memory and can function only in accordance with the secret identification number. The microcomputer can not function other than by this means. Therefore, secret of the data can be kept.

In contrary, in a recording medium such as an optical disk or a magnetic disk, data is recorded only and can be easily read out from the recording medium when it is mounted on a drive unit. It can be considered that whether or not the data is to be read out from the recording medium by the drive unit is determined based on a secret identification number, similar to the IC card system. However, this is possible for a specific drive unit, but the data can be easily read out from the recording medium if any one of drive units not necessary for the secret identification number or existed drive units are used. In this manner, secret of the data cannot be kept in the conventional image data filing system using an optical disk, a magnetic disk or the like.

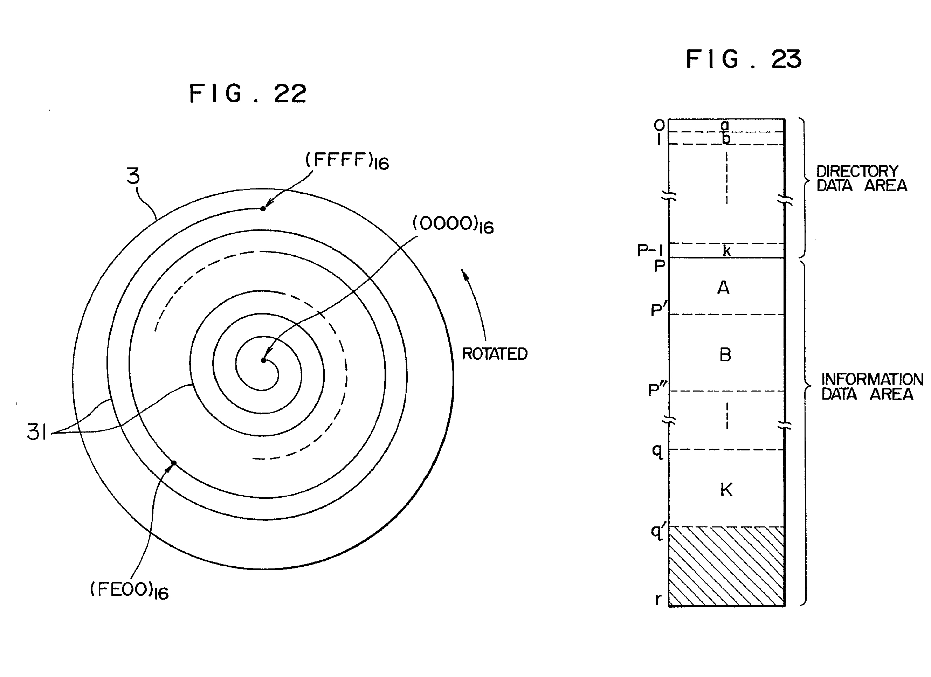

In addition, in the above image data filing system, sizes of the directory data area and the information data area in the disk are determined in advance. Therefore, if so many items of data are recorded that another item of the data cannot be recorded any longer in one of these areas, another file of the image data cannot recorded. In Fig. 23, it is assumed that the data recording area on the disk includes sectors having addresses from 0 to r, the directory data area includes the sectors having the addresses from 0 to p-1, and the information data area includes the sectors having the addresses from p to r. Also, it is assumed that one item of directory data is written in one sector.

In a case where image data files are recorded on such a disk, when a first image data file A is recorded in the sectors having the addresses p to p' of the information data area, an item a of directory data corresponding the image data file A is recorded in the sector having the address 0 in the directory data area. When a next image data file B is recorded in the sectors having the addresses p'+1 to p" in the information data area, subsequent to the image data file A, an item b of the directory data corresponding to the image data file B is recorded in the sector having the address 1 in the directory data area. In the same manner, when the following image data files are recorded in the information data area, items of the directory data corresponding to the image data files are recorded in the directory data area.

However, when an image data file K is recorded in the sectors having the addresses q+1 to q' and an item k of the directory data corresponding to the image data file K is recorded in the sector having the final address p-1 of the directory data area, another image data file can be recorded no longer. As a result, the sectors having the addresses q'+1 to r in the information data area is remained in a state not used. In reverse, there can be a case where sectors yet not used are remained in the directory area though the information data area is filled by image data files. Thus, in a conventional data recording system, there is a problem in that areas not used are remained and thereby use efficiency of the disk is decreased.

In order to prevent this problem, it is necessary that data lengths of all the image data file are the same, and that the information data area and the directory data area are set in the same ratio as that of a data length of each image data file and a data length of each item of the directory data, e.g., in the ratio of 10 : 1. However, the data lengths of the image data files are different one another in accordance with resolution represented by the number of dots, gradation, or whether each image data file is for a monochromatic image or for a color image. Therefore, if the image data files having different data lengths are recorded on the same disk, the above problem is caused.

DISCLOSURE OF INVENTION

An object of the present invention is to provide a data management system, in which the above problem can be dissolved and in which secret of data recorded on a recording medium can be kept, and the recording medium for the same.

Another object of the present invention to provide a data management system, in which the above problem can be dissolved, in which an area not yet used in a data recording area can be decreased, and in which use efficiency of it can be remarkably increased, and a recording medium for the same.

Still another object of the present invention is to provide a data management method, in which a read out operation from a recording medium and an image display operation of desired data can be performed only for an input parameter corresponding to scramble processing having been performed for the data recorded on the recording medium is designated and thereby secret of the recorded data on the recording medium can be kept though this cannot be conventionally achieved.

Further still another object of the present invention is to provide a data management method, in which a reproduction operation from a recording medium and an image display operation of desired data can be performed only when a scramble program corresponding to scramble processing having been performed for the data recorded on the recording medium is designated and thereby secret of the recorded data on the recording medium can be kept though this cannot be conventionally achieved.

The present invention also has, as its object, to provide a data management method, in which data can be correctly obtained from a recording medium only by using a scramble program corresponding to the data recorded on the recording medium and, as a result of this, only a user who can read out the scramble program from the recording medium can use the recording medium substantially, and thereby secret of the data recorded on the recording medium can be kept.

Another object of the present invention is to provide a data management method, in which a recording position of a scramble program on a recording medium can be arbitrarily determined by a user owning the recording medium with the result that a read out operation of the scramble program by another person can be made almost impossible.

Still another object of the present invention is to provide a data management method, in which only a user whose user inherent information is registered on a recording medium can perform a reproduction operation of data recorded on the recording medium and thereby secrecy of the recorded data can be reliably achieved.

Further still another object of the present invention is to provide a data management method, in which a trace of use of a recording medium by a user except for a legitimate user can be reliably remained and thereby reliability of recorded data on the recording medium can be remarkably increased.

In order to achieve the above object, in the data management system according to the present invention, when data is to be recorded on the recording medium, a recording scramble parameter is set and scramble processing is performed for the data in accordance with the recording scramble parameter. In addition, when the data is to be reproduced from the recording medium, a reproduction scramble parameter is set and inverse scramble processing is performed for the data read out from the recording medium in accordance with the reproduction scramble parameter.

In the data management method according to the present invention, one of a plurality of scramble programs, which are separately stored in a memory, is arbitrarily selected. Data, for which scramble processing has been performed in accordance with the selected scramble program, is recorded on the recording medium. Inverse scramble processing is performed for the data read out from the recording medium, from which data original data can be reproduced only in accordance with the scramble program selected upon a recording operation of the data.

In addition, in a data management method according to the present invention, on the recording medium are recorded a plurality of the scramble programs and data for which scramble processing is performed in accordance with one arbitrarily selected from among the scramble programs. Inverse scramble processing is performed for the data read out from the recording medium, from which data original data can be reproduced only in accordance with the scramble program selected upon a recording operation of the data.

Further, in a data management method according to the present invention, when desired data is to be reproduced from a recording medium on which scrambled data and a scramble program are recorded, the scramble program is read out from the recording medium and stored in a scramble table in a data processing apparatus. In order to reproduce the desired original data from the scrambled data, inverse scramble processing is performed for the scrambled data read out from the recording medium in the scramble table in accordance with the scramble program.

The scramble program is input from the outside of the data processing apparatus and recorded on the recording medium. When the desired data is to be recorded, the scramble program is read out from the recording medium and scramble processing is performed for the desired data in the scramble table in accordance with the scramble program. The scrambled data is recorded on the recording medium.

A recording medium according to the present invention has a user data area in which a user can record desired data or from which the user can reproduce the desired data and data recorded in the user data area is scrambled. A scramble program used when inverse scramble processing is performed for the scrambled data to reproduce original data from the scramble data is recorded in a recording position of the user data area arbitrarily designated by a user.

In a data management method according to the present invention, a data format for a recording medium is specialized and at least one information reference area where information inherent to a user is recorded, is provided in the recording medium. In a system for performing a reproduction operation for data, which has been formatted in the specialized format, recorded on the recording medium, comparison information input from the outside of the system is compared with the user inherent information read out from the recording medium and the system is enabled to perform the reproduction operation for the data when the both information coincide with each other.

In addition, in a data management method according to the present invention, a recording medium has a user data area and a directory data area, and the system is disabled from reading out directory data from the directory data area or from determining the directory data from data reproduced from the directory data area, when the user inherent information and the input comparison information coincide with each other.

In a data management method according to the present invention and a recording medium for the method, items of directory data are sequentially recorded in a data recording area of the recording medium from a starting position of the data recording area in a head scanning direction and items of information data are sequentially recorded from an end position thereof.

Since the recorded data on the recording medium is obtained as a result of scramble processing for original data, the original data cannot be reproduced only by reading out the recorded data from the recording medium. The original data can be reproduced from the recorded data only when a reproduction scramble parameter corresponding to the scramble processing performed to obtain the recorded data on the recording medium is used. From the above reason, only a user who can use the reproduction scramble parameter can reproduce the original data from the recording medium. That is, only when the user who can designate a scramble program selected upon a recording operation of the original data causes the data processing apparatus to perform inverse scramble processing for the recorded data by using the scramble program selected upon the recording operation, the original data can be reproduced from the recording medium. Therefore, when the scramble program cannot be read out from the recording medium, the original data cannot be reproduced from the recording medium.

In addition, with the recording medium, the scramble program is recorded in the user data area and a recording position of the program in the user data area is arbitrarily designated by the user. Therefore, the scramble program cannot be read out from the recording medium if the recording position is not known.

Since the recorded data on the recording medium is formed to have a special format, a reproduction operation for the recorded data can be performed by only a drive unit which can treat data having the special format. Therefore, the drive unit can be specified. In addition, even when the drive unit which can perform the reproduction operation for the recorded data is used, the data reproduction operation cannot performed unless the input comparison information coincides with the information inherent to the user which is recorded on the recording medium. As the information inherent to the user, information such as a fingerprint, a handwriting, or a seal can be used and each user can be identified. Therefore, secrecy of the data can be completely achieved.

In addition, when the user inherent information does not coincide with the comparison information, the data processing apparatus can be configured such that the reproduction operation or the determination operation of the directory data is disabled. Therefore, trace representing that the recording medium is fraudulently used can be remained and the data reproduction operation can be reliably prevented in fraudulent use of the recording medium.

Items of the directory data are sequentially recorded in the data recording area from the start position of the area and items of information data are sequentially recorded from the end position thereof. As a result, when the data recording operation cannot be performed any longer, an area from the end position of the recording area for the last item of the directory data to the start position of the recording area for the last item of information data is remained as an area not yet used. However, a data length of the area not yet used is smaller than a sum of a data length of one item or one unit of the information data and a data length of one item or one unit of the directory data. On the other hand, in the conventional technique shown in Fig. 23, the data length of the area not yet used is generally larger than the above sum of the data lengths and there is, therefore, remained an area in which one or more items of the information data can be recorded. Therefore, in the medium recording apparatus according to the present invention, the size of the area not yet used can be remarkably decreased and use efficiency can be increased.

BRIEF DESCRIPTION OF DRAWINGS

Fig. 1 is a block diagram showing an arrangement of a first embodiment for realizing a data management method according to the present invention;

Fig. 2 is a diagram showing an example of a format of image data;

Fig. 3 is a diagram showing an example of a scramble parameter;

Fig. 4 is a diagram showing a definite example of scramble processing and inverse scramble processing in the embodiment shown in Fig. 1;

Fig. 5 is a block diagram showing an arrangement of a second embodiment for realizing a data management method according to the present invention;

Figs. 6 to 8 are diagrams showing definite examples of scramble processing and inverse scramble processing in the embodiment shown in Fig. 5, respectively;

Fig. 9 is a block diagram showing an arrangement of a third embodiment for realizing a data management method according to the present invention;

Fig. 10 is a block diagram showing an arrangement of a fourth embodiment for realizing a data management method according to the present invention;

Fig. 11 is a diagram showing a data area of a recording medium according to the present invention;

Fig. 12 is a block diagram showing an arrangement of a fifth embodiment for realizing a data management method according to the present invention;

Fig. 13 is a flow chart for explaining an operation of the fifth embodiment;

Fig. 14 is a illustration for explaining a function for disabling a data reproduction operation in a sixth embodiment for realizing a data management method according to the present invention;

Fig. 15 is a diagram showing a definite example of means for enabling the data reproduction operation from the recording medium from which the data reproduction is disabled;

Figs. 16 to 18 are diagrams for showing data modulating methods to disable data determination in a seventh embodiment for realizing a data management method according to the present invention;

Fig. 19 is a flow chart for explaining an operation of the seventh embodiment;

Fig. 20 shows an arrangement of an eighth embodiment of a data management method according to the present invention and a recording medium for the same;

Fig. 21 is a block diagram roughly showing an arrangement of image data filing system which uses the data management method according to the present invention;

Fig. 22 is a definite example of a track pattern of a disk-like recording medium in Fig. 21; and

Fig. 23 is a block diagram showing an arrangement of a conventional data management method.

BEST MODE FOR CARRYING OUT THE INVENTION

Embodiments of the present invention will be described below with reference to the accompanying drawings.

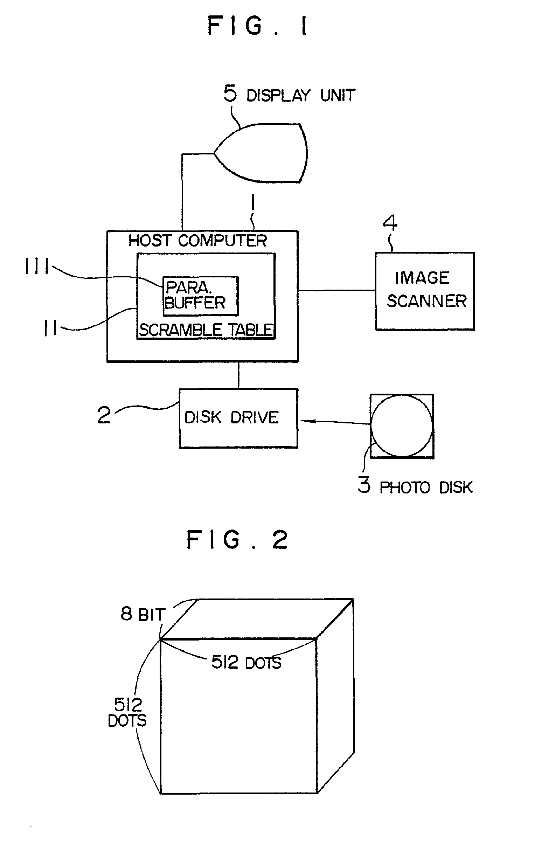

Fig. 1 is a block diagram showing an arrangement of a data management system according to a first embodiment of the present invention. Numeral 1 indicates a host computer, numeral 11 a scramble table, numeral 111 a parameter buffer, numeral 2 a disk drive unit, numeral 3 an optical disk, numeral 4 an image scanner, and numeral 5 a display unit.

In the figure, the optical disk 3 is a 5.25 inch type of optical disk with a cartridge standardized on the basis of, for example, ISO-9171 and has an user data area and a directory data area. In the user data area are recorded many files of image data such as X-ray photographs required to manage in units of persons and in the directory data area is recorded items of directory data, which are respectively provided for the files of the image data, and each of which includes data representing an start address, a data length, and a file name. Here, scramble processing is performed for the image data and the directory data and methods of the scramble processing are different from one another for every optical disk.

If an user designates a necessary file name and inputs a parameter inherent to the user, e.g., a fingerprint, a retina pattern, a sign, from the image scanner 4, the host computer 1 loads these and generates a scramble parameter from the parameter to store the same in the parameter buffer 111 of the scramble table 11. Then, the host computer 1 starts the disk drive unit 2 and causes it to start a data read-out operation from the optical disk 3.

First, the data reproduction operation is performed for an item of the directory data recorded in the directory data area of the optical disk 3. The recorded directory data item, which has been subjected to the scramble processing, is read out and supplied to the host computer 1. Inverse scramble processing for the supplied directory data item is performed by the host computer 1 in accordance with a scramble parameter stored in the parameter table 111 of the scramble table 11 to obtain a reproduced item of the directory data. A file name in the reproduced directory data item is compared with the file name designated by the user. When both file names coincide with each other, start address data and data length data are extracted from the reproduced directory data item which includes data representing the file name and supplied to the disk drive unit 2 to cause it to read out a file of the image data, having the file name and designated by the user,

from the user data area of the optical disk 3. This read out file of the image data is supplied to the scramble table 11 of the host computer 1. The inverse scramble processing is performed for the image data in the supplied file in accordance with the scramble parameter stored in the parameter buffer 111 to obtain reproduced image data, similar to the read out directory data item. The reproduced image data is converted into an analog image signal and supplied to the display unit 5.

Here, if original data is correctly reproduced from data recorded on the optical disk 3 by performing the inverse scramble processing for the recorded data in accordance with the scramble parameter stored in the scramble buffer 111, an original directory data item can be reproduced from an directory data item read out from the optical disk 3. In addition, desired image data can be read out from the optical disk 3 on the basis of the start address and the data length in the reproduced directory data which includes the file name designated by the user and original image data can be correctly reproduced from the recorded image data by using the scramble table 11 and the analog image signal is generated from the original image data so that an image required by the user is displayed on the display unit 5.

However, with the mounted optical disk 3, when the scramble parameter stored in the parameter buffer 111 does not correspond to the scramble processing for data recorded on the optical disk 3, the original directory data item cannot be correctly reproduced from the read-out directory data item from the optical disk 3 by using the scramble table 11. Therefore, a file name in any directory data does not coincides with the file name designated by the user so that reproduction of image data from the optical disk 3 cannot be performed. In addition, even if there is directory data having a file name which erroneously coincides with the designated file name, the original image data cannot correctly reproduced from the image data read out from the optical disk 3 in accordance with the directory data in the scramble table 11, since data represented by the start address and the data length in this case is random and the read out image data is quite different from the desired image data by the user. Therefore, meaningless image is only displayed on the display unit 5.

In this manner, only when the scramble parameter corresponding to the scramble processing, to which data recorded on the mounted optical disk 3 has been subjected, is stored in the parameter buffer 111, the image data required by the user can be reproduced from the optical disk 3 and an correct image based on the image data can be displayed on the display unit 5. Here, the scramble processing method of data recorded on the optical disk 3 corresponds to a parameter inherent to the user such as a fingerprint, a retina pattern and sign, and the scramble parameter stored in the parameter buffer 111 is formed from the inherent parameter. Therefore, a correct data read-out operation from each optical disk 3 can be performed only by the user who owns the optical disk 3. In addition, though image data recorded on the optical disk 3 can be read out by usual disk drive unit, the read out image data has been subjected to the scramble processing. Therefore, even if the read out image data is converted into the image signal and supplied to the display unit, a correct image cannot be displayed.

As described above, in the embodiment, only a specific person can correctly perform a reproducing operation of data from an optical disk, and thereby secret of data can be kept.

When image data is to be recorded on the optical disk 3, the parameter inherent to the user is first input by the image scanner 4 and a scramble parameter obtained from the inherent parameter is stored in the parameter buffer 111. Then, a desired image is input by the image scanner 4 and an image signal corresponding to the desired image is converted into digital image data which is supplied to the host computer 1. The host computer 1 performs the scramble processing for the supplied image data in accordance with the scramble parameter stored in the parameter buffer 111 of the scramble table 11 and supplies the processing results to the disk drive unit 2. Thus, the image data which has been subjected to the scramble processing is recorded on the user data area of the optical disk 3. At the same time, an item of the directory data corresponding to the image data is subjected to the scramble processing, similar to the image data, and recorded on the directory data area of the optical disk 3.

Next, the scramble processing method which is used in the embodiment will be described below.

The scramble processing is for changing an arrangement of bits constituting original data and the original data is converted into data quite different from the original data by the scramble processing. Therefore, the original data can be reproduced by restoring the bit arrangement of the scrambled data which has been subjected to the scramble processing, i.e., by the inverse scramble processing. The scramble processing is performed in accordance with a scramble program, and, in this embodiment, the scramble processing is performed based on the above scramble parameter by using the one scramble program. From the above reason, if the scramble parameter is different, the scramble processing is also different.

An example of the scramble processing method in which the scramble processing is different for every scramble parameter will be described below with reference to Figs. 2 to 4.

Fig. 2 shows an example of image data which has resolution of 512 dots (pixels) in a horizontal direction and 512 dots in a vertical direction, each dot being represented by 8-bit data. Therefore, when the image data is a monochromatic image, it is multivalue image having gradation of 256 levels.

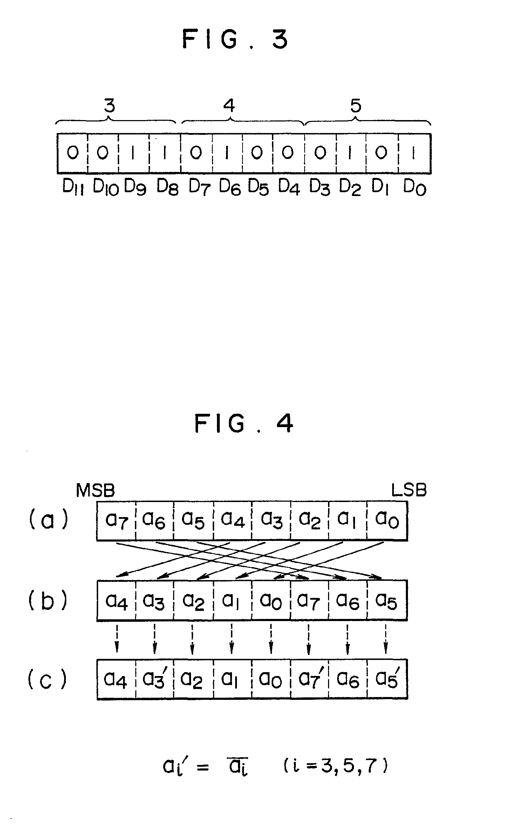

The scramble parameter is obtained by analyzing a fingerprint, a retina pattern, sign or the like of a person and converting it into a digital value. The number of bits of the parameter can be arbitrarily determined and an example in which it is 12-bit constitution, i.e., 3 digits in hexadecimal notation is shwon in Fig. 3. Here, $D_{11}$ is a most significant bit (a MSB) and $D_0$ is a least significant bit (an LSB). The scramble parameter in this case is assumed to be 001101000101 and therefore it is $(345)_{16}$ in hexadecimal notation.

It is assumed that upper four bits $D_{11}$ to $D_8$ and lower eight bits $D_7$ to $D_0$ of the scramble parameter are used in the scramble program to designate the number of rotations of data bits in a MSB direction and to perform exclusive OR processing for data which has been subjected to the rotation processing, respectively.

The scramble processing is performed for the data in units of 8-bits. If the scramble processing is performed for 8-bit data having a bit $a_7$ as a MSB and a bit $a_0$ as an LSB, as shown in Fig. 4A, by using the scramble parameter shown in Fig. 3, the 8-bit data shown in Fig. 4A is rotated three times in a left direction on the figure to convert the 8-bit data into 8-bit data shown in Fig. 4B, since the upper four bits $D_{11}$ to $D_8$ of the scramble parameter represents a value $(3)_{16}$.

Then, the exclusive OR processing is performed between each bit of the 8-bit data shown in Fig. 4B and a corresponding bit of the lower eight bits $D_7$ to $D_0$ having the bit $D_7$ shown in Fig. 3 as the MSB. That is, the exclusive OR processing is performed between the bit $D_7$ and the bit $a_4$ as the MSB of the 8-bit data shown in Fig. 4B, the bit $D_6$ and the bit $a_3$, the bit $D_5$ and the bit $a_2$, the bit $D_4$ and the bit $a_1$, the bit $D_3$ and the bit $a_0$, the bit $D_2$ and the bit $a_7$, the bit $D_1$ and the bit $a_6$, the bit $D_0$ and the bit $a_5$. Since the bits $D_6$, $D_2$, and $D_0$ are "1", the bit $a_3$, $a_7$, and $a_5$ shown in Fig. 4B, which are to be subjected to the exclusive OR processing together with the bits $D_6$, $D_2$, and $D_0$, respectively, are inverted to be the bit $a_3'$ ($=\overline{a}_3$), $a_7'$ ($=\overline{a}_7$), and $a_5$ ($=\overline{a}_5$). Since the other bits $D_7$, $D_5$, $D_4$, $D_3$, $D_1$ are "0", the bit $a_4$, $a_2$, $a_1$, $a_0$, and $a_6$ shown in Fig. 4B, which are to be subjected to the exclusive OR·processing together with the bits $D_7$, $D_5$, $D_4$, $D_3$, and $D_1$ respectively, are not changed, as data bits shown in Fig. 4C. That is, the 8-bit data shown in Fig. 4C is obtained when the scramble processing is performed for the 8-bit data shown in Fig. 4a in accordance with the above scramble program by using the scramble parameter shown in Fig. 3.

In this manner, when the inverse scramble processing is performed for data for which the scramble processing has been performed, the same scramble parameter is used. However, in this case, the exclusive OR processing is first performed for the lower eight bits $D_7$ to $D_0$ of the scramble parameter and the 8-bit data shown in Fig. 4C, in the same manner as described above. As a result, the 8-bit data is obtained as shown in Fig. 4B. Next, the 8-bit data shown in Fig. 4B are rotated in the LSB direction opposite to that when the scramble processing is performed, by the value $(3)_{16}$ represented by the upper four bits $D_{11}$ to $D_9$, i.e., three times. As a result, the original 8-bit data shown in Fig. 4A is obtained.

In this manner, the original data can be reproduced by using the same scramble parameter as used in the scramble processing. If any bit of the scramble parameter in the scramble processing and the inverse scramble processing is different, the original data cannot be reproduced.

Thus, when the scramble processing and the inverse scramble processing are performed for data in units of eight bits, the above two processing are performed for each dot (pixel) in the image data constituted as shown in Fig. 2.

Note that, in the embodiment, the recording medium may be not only the optical disk, but also another recording medium such as an optical card, a magnetic disk, or a magnetic tape. In addition, the constitution of the image data shown in Fig. 2, and the scramble processing method described with reference to Figs. 3 and 4 are only examples, and a personal identification number may be used as the input information inherent to a person in an IC card system.

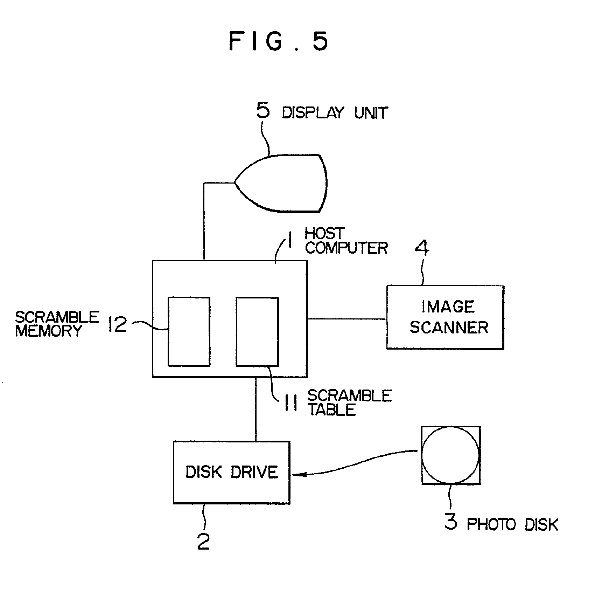

Fig. 5 is a block diagram showing an arrangement of a data management system according to a second embodiment of the present invention. Numeral 12 indicates a scramble memory and the same reference numerals are assigned to components corresponding to those shown in Fig. 1.

In the figure, many scramble programs are stored in the scramble table 12 in the host computer 1 and the directory data and the image data recorded on the optical disk 3 has been subjected to the scramble processing in accordance with one of the stored scramble programs. Here, the scramble program used in the scramble processing is referred to as a selected scramble program hereinafter.

When the user designates a necessary file name and a scramble program, the host computer loads the file name and read out the designated scramble program from the scramble memory to store the same in the scramble table 11. Here, numbers are assigned to the scramble programs, respectively, and the scramble program is designated by inputting the number assigned to the scramble program as the personal identification number. After the above processing is performed, the host computer 11 starts the disk drive unit 2 and causes it to start a data reading out operation from the photo disk 3.

First, the reading out operation from the directory data area of the optical disk 3 is performed and the directory data, which has been subjected to the scramble processing, is read out. The read out directory data is supplied to the host computer 1. In the host computer 1, the supplied directory data is subjected to the inverse scramble processing in accordance with the scramble program stored in the scramble table 11 and the file name in each item of the directory data is compared with the file name designated by the user. When coincidence is obtained between the file names, a start address and a data length are read out from an item of the directory data including the file name and supplied to the disk drive unit 2, and a file of the image data having the same file name as designated by the user is read out from the user data area of the optical disk 3. The read out image data is supplied to the scramble table of the host computer 1, the inverse scramble processing is performed for the read out image data in accordance with the above scramble parameter stored in the scramble table 11, similar to the directory data, and further converted into an analog image signal to be supplied to the display unit 5.

Here, if the scramble program stored in the scramble table 11 is identical to the selected scramble program used in the recording operation of the image data and original data can be correctly reproduced from data recorded on the optical disk 3 by the inverse scramble processing, the original directory data can be correctly reproduced from the directory data recorded on the optical disk 3. Subsequently, desired image data can read out from the optical disk 3 in accordance with a start address and a data length in the reproduced directory data including a file name designated by a user and the original image data can be correctly reproduced from the read out image data to generate the analog image data signal from the original image data and then to display a desired image corresponding to the original image data on the display unit 5.

However, with the mounted optical disk 3, when the scramble program stored in the scramble table 11 does not coincide with the above selected scramble program and does not correspond to the scramble processing concerning the recorded data on the optical disk 3, the original directory data cannot be correctly reproduced from the directory data read out from the optical disk 3. As a result, the file name included in any item of the directory data does not coincide with the file name designated by the user. Therefore, a reproducing operation of the image data from the optical disk 3 cannot be performed. In addition, even if an item of the directory data including the file name coinciding with the file name designated by the user is accidentally obtained, the original image data cannot be reproduced from the image data which is read out from the optical disk 3 in accordance with the directory data item in the scramble table 11. This is because an extracted start address and data length are random in this case and the read out image data, therefore, is quite different from that required by the user. Thus, meaningless image is displayed only on the display unit 5.

In this manner, only when a scramble program which corresponds to the select scramble program for the scramble processing concerning the recorded data on the optical disk 3 is stored in the scramble table 11, the original image data requested by the user can be reproduced from image data on the optical disk 3 and a correct image can be displayed on the display unit 5 based on the reproduced image data. Therefore, the correct data reproducing operation from the optical disk can be performed by only the user who can designate the selected scramule program. The recorded data on such a photo disk can be reproduced even by using a usual drive unit. However, since the reproduced data has been subjected to the scramble processing, the correct image cannot be displayed on the display unit even if the reproduced image data is converted into the image data signal to supply the signal to the display unit.

An apparent from the above, according to this embodiment, only the user who can designate the selected scramble program can correctly perform the reproducing operation of the original data from the optical disk 3.

From the above reason, when an image such as an X-ray photograph which is undesirably known by another person is filed, secrecy of data of the image can be achieved by informing a secret identification number of the selected scramble program to only a person who owns the optical disk 3.

In order to record a desired image on the optical disk 3, a person first input a secret identification number to designate the selected scramble program. The host computer reads out the designated scramble program from the scramble memory 12 in response to the input secret identification number and stores the read out program as the selection scramble program in the scramble table 11. Then, the person inputs the desired image by the image scanner 4 and an image data signal thus obtained is converted into digital image data and the image data is supplied to the host computer 1. The host computer 1 performs the scramble processing for the supplied image data in accordance with the scramble program stored in the scramble table 11 and supplies the processing result to the drive unit 2. Thus, the image data which has been subjected to the scramble processing is recorded in a user data area on the optical disk 3. In addition to this, the directory data corresponding to the image data is subjected to the scramble processing similar to the image data and recorded in a directory data area on the optical disk 3.

Next, the scramble processing method used in the embodiment will be described below.

The scramble processing is processing for changing an arrangement of bits constituting data. By this processing the original data is converted into data quite different from the original data. The original data can be reproduced by changing the bit arrangement of the data obtained as a result of the scramble processing to a original state, i.e., by performing the inverse scramble processing for the data. This scramble processing is performed in accordance with the scramble program and the original data is reprodced by performing the inverse scramble processing for the data in accordance with the same scramble program. If the inverse scramble processing is performed for the data in accordance with a scramble program different from that used in the scramble processing, the original data cannot be reproduced.

It is assumed that the image data has resolution of 512 dots (pixels) in a horizontal direction and 512 dots (pixels) in a vertical direction and each dot corresponds to 8-bit data, as shown in Fig. 2.

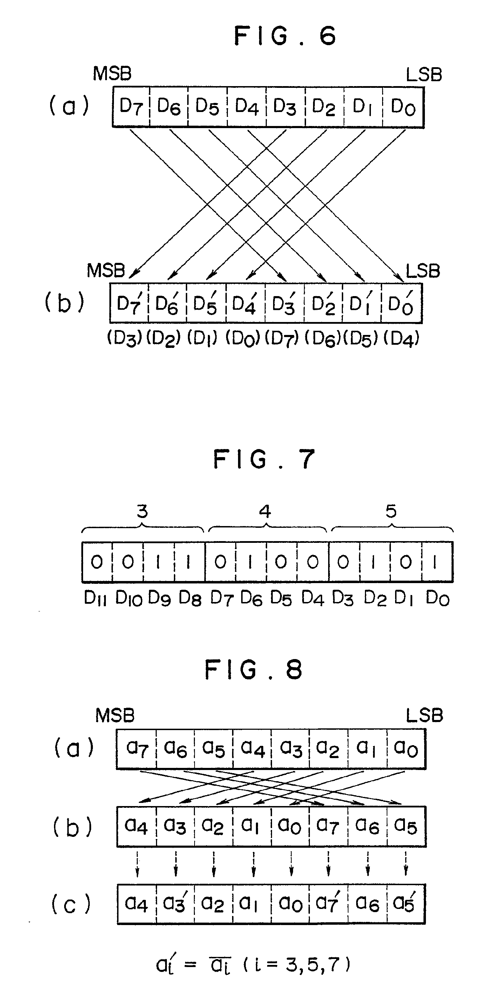

The scramble processing for such image data or the inverse scramble processing is performed in units of either bits, i.e., in units of dots (pixels). There are many methods of the scramble processing and many scramble programs corresponding to the methods are stored in the scramble memory in the host computer 1. A scramble processing method in which rearrangement of the eight bits is performed will be described below with reference to Fig. 6.

Fig. 6 shows an example of the methods of rearranging bits and the method corresponds to one scramble program.

In this processing method, of bits $D_7$, $D_6$, $D_5$, ... $D_1$, $D_0$ of 8-bit data having the bit $D_7$ as a MSB (a most significant bit), and $D_0$ as an LSB (a least significant bit), as shown in Fig. 6A, the upper four bits $D_7$ to $D_4$ and the lower four bits $D_3$ to $D_0$ are shifted into a lower bit side and a upper bit side by our bits, respectively, in order to obtain data shown in Fig. 6B whose bits are rearranged. This is the scramble processing performed in accordance with one scramble program and inversely the data shown in Fig. 6B is converted into the data shown in Fig. 6A in the inverse scramble processing in accordance with the same scramble program.

There are 8 x 7 x 6 x 5 x 4 x 3 x 2 x 1 = 40320 methods of the bit rearranging processing for 8-bit data. Therefore, when all the methods can be used, 40320 scramble programs are stored in scramble memory 12 shown in Fig. 5.

Such many scramble processing methods of the same type wherein methods of rearranging bits are different from one another may be used or combinations of many scramble processing methods of different types may be used. For example, scramble processing may be added in which operation processing with another item of 8-bit data is performed together with the bit rearraning processing and thereby the number of scramble processing methods can be increased. In addition, many scramble programs having different parameters may be provided and a scramble processing method may be performed in accordance with the parameter. An example of the scramble processing methods in this case will be described below with reference to Figs. 7 and 8.

Fig. 7 shows an example of a parameter represented by a 12-bit constitution and representing a value of three digits in hexadecimal notation. Here, it is assumed that the scramble parameter in this case is (001101000101) which has a bit $D_{11}$ as a MSB (a most significant bit) and a bit $D_0$ as an LSB (a least significant bit). Therefore, a value $(345)_{16}$ is represented by this scramble parameter in hexadecimal notation.

The scramble parameter is used in the scramble program such that the upper four bits $D_{11}$ to $D_8$ indicates the number of times for the data bits to be rotated in a upper bit direction and the lower eight bits $D_7$ to $D_4$ are used for exclusive OR processing with the shifted data bits.

Thus, the scramble processing is performed for the data in units of 8-bits. It is assumed that the scramble processing is performed for data having a bit $a_7$ as a MSB and a bit $a_0$ as an LSB, as shown in Fig. 8A, in accordance with the scramble program having the parameter shown in Fig. 7. At this time, since the upper four bits $D_{11}$ to $D_8$ of the parameter represents data $(3)_{16}$, the data bits shown in Fig. 8A is first rotated three times in a left direction on the figure and, as a result of the rotations, converted into 8-bit data shown in Fig. 8B. Then, the exclusive OR processing is performed for each bit of the 8-bit data shown in Fig. 8B and a corresponding one of the lower eight bits having the bit $D_7$ as a MSB shown in Fig. 7. More specifically, the exclusive OR processing is performed between a bit $a_4$ as a MSB of the 8-bit data shown in Fig. 8B and the bit $D_7$, a bit $a_3$ and the bit $D_6$, a bit $a_2$ and the bit $D_5$, a bit $a_1$ and the bit $D_4$, a bit $a_0$ and the bit $D_3$, a bit $a_7$ and the bit $D_2$, a bit $a_6$ and the bit $D_1$, and a bit $a_5$ and the bit $D_0$. Here, since the bits $D_6$, $D_2$, and $D_0$ of the scramble parameter are "1", the bits $a_3$, $a_7$, and $a_5$ of the 8-bit data shown in Fig. 8B which are respectively subjected to the exclusive OR processing together with the bits $D_6$, $D_2$, and $D_0$, are inverted to be $a'_3$ ($=a_3$), $a'_7$ ($=a_7$), and $a'_5$ ($=a_5$). In contrary, since the other bits $D_7$, $D_5$, $D_4$, $D_3$, and $D_1$ are "0", the bits $a_4$, $a_2$, $a_1$, $a_0$, and $a_6$ of the 8-bit data shown in Fig. 8B which are respectively subjected to the exclusive OR processing together with the bits $D_7$, $D_5$, $D_4$, $D_3$, and $D_1$, are not changed to be used as bits of data shown in Fig. 8C. That is, the 8-bit data shown in Fig. 8C is obtained when the scramble processing is performed for the data in accordance with the scramble program having the parameter shown in Fig. 7.

When the inverse scramble processing is performed for the data thus scrambled, the scramble program having the same parameter that shown in Fig. 7 is used. In this case, however, the exclusive OR processing is performed for the lower eight bits $D_7$ to $D_0$ and the 8-bit data shown in Fig. 8C. As a result, the 8-bit data shown in Fig. 8B is obtained. Then, the 8-bit data shown in fig. 8B is rotated by the number of times represented by a value $(3)_{16}$ of the upper four bits $D_{11}$ to $D_8$ of the parameter shown in Fig. 7, i.e. three times, in a lower bit direction, which is opposite to the direction when the scramble processing is performed. Thus, the original 8-bit data shown in Fig. 8A can be obtained.

In this manner, the original data can be reproduced by using the scramble program having the same parameter as in the scramble processing.

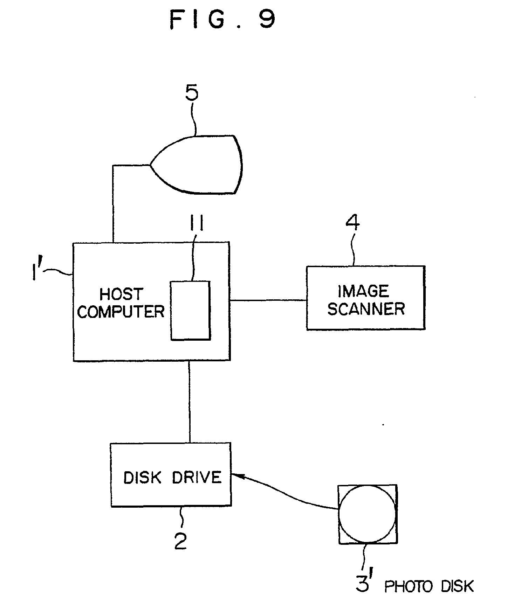

Fig. 9 is a block diagram showing an arrangement of a data managing system according to a third embodiment of the present invention. In the figure, numeral 1' and 3' indicate a host computer and an optical disk, respectively and the same reference numerals are assigned to components corresponding to those in Fig. 5.

In the embodiment shown in Fig. 5, the scramble memory 12 is provided in the host computer 1 and many scramble programs are stored in the memory 12. However, in the embodiment shown in Fig. 9, many scramble programs are recorded in each optical disk 3' such that these programs cannot be deleted. A secret identification number is input in a recording or reproducing operation of data. A scramble program is read out from the optical disk 3' in response to the input secret identification number and stored in the scramble table 11 in the host computer 1'. The same operations as those described in Fig. 1 except for the above operation are performed. As a matter of course, each scramble program on the optical disk 3' is not subject to the scramble processing.

Note that the recording medium such as an optical card, a magnetic card, or a magnetic tape may be used in place of the photo disk in the second and third embodiments.

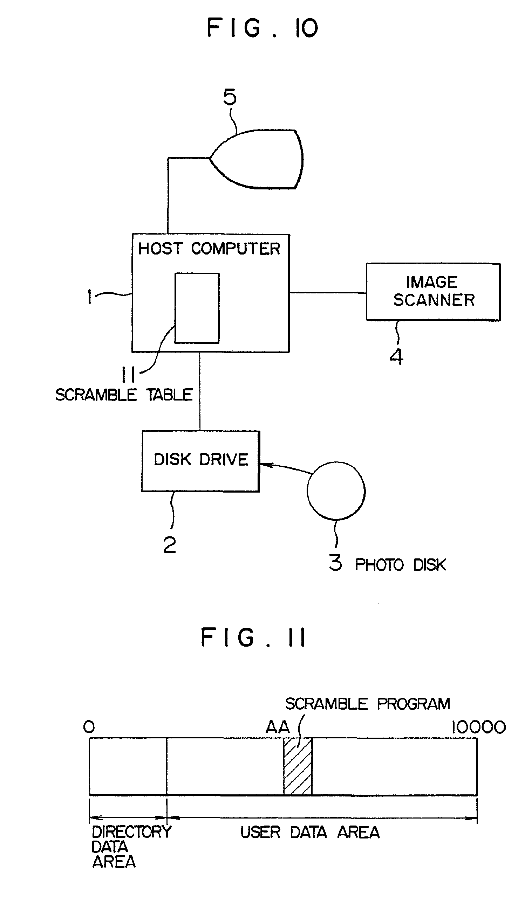

Fig. 10 is a block diagram showing an arrangement of a fourth embodiment for realizing the data management method according to the present invention. The same reference numerals are assigned to components corresponding to those shown in Fig. 1.

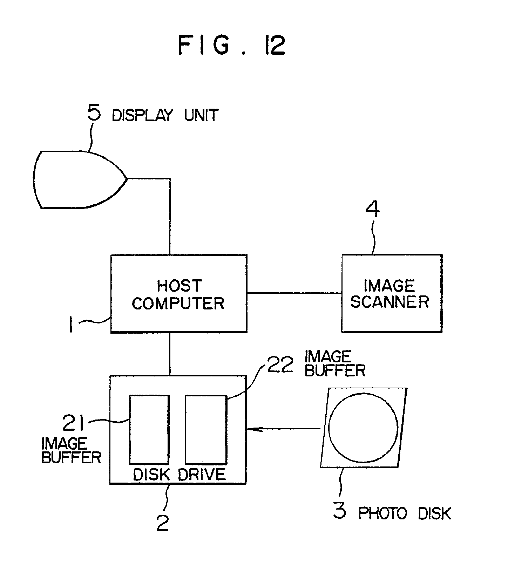

In the figure, the photo disk has the same user data area and directory data area as those shown in the embodiment in Fig. 1. As shown in Fig. 11, a scramble program is recorded in the user data area and the scramble processing is performed for image data and directory data in accordance with the scramble program.

The scramble program is recorded at an arbitrary position of the user data area which is designated by a user.

In Fig. 10, when desired image data is to be reproduced from the optical disk 3, a user first designates a file name of the image data and an address AA (shown in Fig. 11) which represents the recorded position of the scramble program on the optical disk 3. The host computer 1 receives the file name and the address AA and reads out the scramble program from the optical disk 3 to store the same in the scramble table 11. After the above processing is performed, the host computer 1 causes the disk drive unit 2 to start a reproducing operation of the image data from the photo disk 3.

First, a reading out operation of scrambled directory data from the optical disk 3 is performed. That is, the recorded directory data, which has been subject to scramble processing, is read out and supplied to the host computer 1. The host computer 1 performs inverse scramble processing for the supplied directory data in accordance with the scramble program stored in the scramble table 11 to obtain reproduced directory data and compares a file name in the reproduced directory data with the file name designated by the user. When coincidence is obtained between the both file names, a start address and a data length are extracted from the reproduced directory data including the file name and supplied to the disk drive unit 2 to cause the disk drive unit 2 to read out scrambled image data in a file having the file name designated by the user from the user data area of the optical disk 3. The read out image data is supplied to the scramble table 11 in the host computer 1 and the inverse scramble processing is performed for the supplied image data in accordance with the above scramble program stored in the scramble table 11, similar to the read out directory data to obtain reproduced image data. The reproduced image data is converted into an analog image signal and supplied to the display unit 5.

A recording operation of the scramble program is performed when an optical disk which is not yet used is first mounted or when the first image data is recorded on an optical disk which is not yet used. The scramble program, which is input to the host computer 1 by a user, may have a predetermined constitution or have a constitution arbitrarily formed by the user. Even in either case, the inverse scramble processing can be performed only in accordance with the scramble program read out from the optical disk to reproduce data.

In the recording operation of the scramble program, the scramble program is input and the recording position of the scramble program on the optical disk 3 is designated as a start address AA. The host computer 1 starts the disk drive unit 2 to cause it to record the scramble program in the designated recording position on the optical disk 3 without performing the scramble processing for the program. Note that a data length of the scramble program is preferably predetermined and constant, because the scramble program can be read out from the optical disk 3 by only the designation of the start address AA.

When the image data is to be recorded on the photo disk 3, the user designates the recording position of the scramble program on the optical disk 3 as the start address AA. The host computer 1 starts the disk drive unit 2 in response to the start address AA to cause it to read out the scramble program from the optical disk 3 and stores the read out scramble program in the scramble table 11. Then, a desired image is input by the image scanner 4. An image signal obtained as a result of input is converted into the digital image data and the image data is supplied to the host computer 1. The host computer 1 performs the scramble processing for the supplied image data in accordance with the scramble program stored in the scramble table 11 and supplies the scrambled image data to the disk drive unit 2. As a result, the scrambled image data is recorded in the user data area on the optical disk 3. As well as the scrambled image data, the scramble processing is performed for directory data corresponding to the image data and the scrambled directory data is recorded in the directory data area on the optical disk 3.

As apparent from the above, only when the scramble program is correctly read out from the optical disk 3, the original directory data can be correctly reproduced from the scrambled directory data read out from the optical disk 3. In addition, the scrambled image data can be correctly read out from the photo disk 3 in accordance with the start address and the data length in the directory data including the file name designated by the user. Then, the original image data can be correctly reproduced from the read out image data in the scramble table 11 and the analog image signal is generated from the image data. As a result, the image requested by the user can be displayed on the display unit 5. In addition, since the scramble program is recorded on a position of the optical disk 3 arbitrarily designated by the user, there is almost not the possibility that another person can correctly read out the scramble program. Further, when the scramble program cannot be read out, the image data cannot be recorded on the optical disk 3. This enables to prevent data on the optical disk 3 from being destroyed by another person.

Therefore, only the specific user, who can designate a recording position of the scramble program on the optical disk 3, can correctly perform the reproducing operation of data from the optical disk 3. From this reason, when an image such as an X-ray photograph which is undesirably known by another person is filed, secrecy of the image can be kept since only the user who owns the optical disk 3 knows the recording position of the scramble program.

Next, a scramble processing method used in the embodiment will be described below.

The scramble processing is processing for changing an arrangement of bits constituting data. As a result of this processing, the original data can be converted into data quite different from the original data. Therefore, the original data can be reproduced from the converted data, which has been subject to the scramble processing, by restoring the bit arrangement of the converted data to the original state, i.e., by performing the inverse scramble processing for the converted data. That is, the scramble processing is performed for the original data in accordance with the scramble program and the inverse scramble processing is performed for the scrambled data in accordance with the identical scramble program with the result that the original data can be reproduced.

Here, it is assumed that image data has resolution of 512 dots (pixels) in a horizontal direction and 512 dots (pixels) in a vertical direction, as shown in Fig. 2 and that each dot is represented by 8-bit data.

The scramble processing or the inverse scramble processing is performed for the image data in units of eight bits, i.e., in units of dots (pixels). There are many scramble processing methods and the same method as described in Fig. 6 can be used as the scramble processing for performing rearrangement of eight bits.

A scramble program for the scramble processing and the inverse scramble processing can be used for all the photo disks. In this case, the scramble program is identical for all the optical disks. However, recording positions of the scramble program on the photo disks are different from one another for all the optical disks or for all users. Therefore, even though an institution of the scramble program is known by another person, there is no problem if the recording position of the program is not known. As a matter of course, the scramble program may be created by the user and used. In addition, the scramble programs may be different from one another for every optical disk.

If the scramble program is recorded on the photo disk by the manufacturer of the optical disk in advance since it is not necessary for the user to know contents of the scramble program, an address representing the recording position of the scramble program on the photo disk may be informed to only the user.

Note that not but the optical disk but also another type of recording medium such as a photo card, a magnetic disk, or a magnetic tape may be available as the recording medium in the fourth embodiment or in Fig. 11. The scramble table 11 may be realized by a program of software or hardware and may be provided in another location, e.g., in the disk drive unit 2.

Fig. 12 is a block diagram showing an arrangement of a fifth embodiment for realizing a data management method according to the present invention. Numerals 21 and 22 indicate image buffers and the same reference numerals are assigned to components corresponding to those shown in Fig. 1.

In the figure, the photo disk 3 has a user data area and a directory data area similar to the embodiment shown in Fig. 1. Image data and directory data are recorded in the user data area and the directory data area to have specific formats, respectively. The optical disk 3 further has a specific area (to be referred to as an information reference area hereinafter), which is different from the user data area or the directory data area, and in which specific information representing a user such as an owner of the optical disk 3 (to be referred to as user inherent information hereinafter) is recorded. As the user inherent information, information representing a physical feature such as a fingerprint, a retina pattern, or a photograph of the user's face, information representing a feature yielded from the user such as a handwriting, a voiceprint, or information representing a thing which the user owns such as a seal may be used. It may be a secret identification number representing a numeral pattern.

When the user inherent information is image information such as the fingerprint, the image scanner 4 acts as input means for inputting the image information such the fingerprint of the user who mounts and uses the optical disk 3 in the disk drive unit 2. If the user inherent information is a voiceprint, a microphone is used as the input means, and if it is a secret identification number, a keyboard is used as the input means. The information input from the input means is referred to as comparison information hereinafter. Now, an operation in a case that the comparison information is the image information will be described below.

The disk drive unit 2 is provided with two image buffers 21 and 22 and comparing means (not shown). After the comparison information input from the image scanner 4 is processed by the host computer 1, it is stored in the image buffer 21, and the user inherent information read out from the optical disk 3 is stored in the image buffer 22.

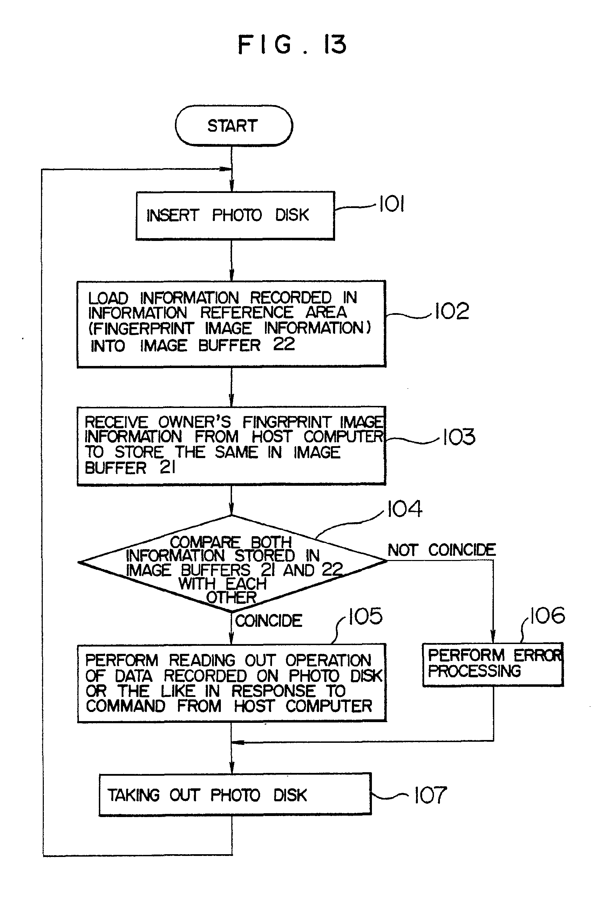

An operation of the embodiment will be described below with reference to Fig. 13.

First, the optical disk 3 is insert into the disk drive unit 2 (a step 101). At this time, the host computer 1 starts the disk drive unit 2 to cause it to read out fingerprint image information as the user inherent information from the information reference area of the optical disk 3. The read out user inherent information is stored in the image buffer 22 in the disk drive unit 2 (a step 102). Then, when a file name of image data requested by the user is designated and the comparison information of the user, e.g., the fingerprint image information is input from the image scanner 4, the host computer 1 processes the comparison information and transmits the processing result to the disk drive unit 2 to store the same in the image buffer 21 (a step 103).

Next, the disk drive unit 2 compares the comparison information with the user inherent information (a step 104). At this time, the compared result is transmitted to the host computer 1. When the comparison information coincides with the user inherent information, the host computer 1 supplies a data reproduction command to the disk drive unit 2. The disk drive unit 2 reproduces items of directory data from the directory data area of the optical disk 3 in response to the data reproduction command and the items of the reproduced directory data are sequentially supplied to the host computer 1. The host computer 1 compares a file name in each item of the reproduced directory data with the file name designated by the user. When coincidence between the both file names is obtained, the host computer 1 extracts a start address and a data length from an item of the reproduced directory data including the file name and supplies them to the disk drive unit 2 to cause it to read out image data in a file having the file name designated by the user from the user data area of the optical disk 3. The read out image data is converted into an analog image signal by the host computer 1 and supplied to the display unit 5. Therefore, an image desired by the user is displayed on the display unit 5 (a step 5 until this). Thereafter, the photo disk is taken out from the disk drive unit 2 in response to a command input by the user (a step 107).

When the comparison information stored in the image buffer 21 in the disk drive unit 2 does not coincide with the user inherent information stored in the image buffer 22, the host computer 1 inhibits a reading out operation of data from the optical disk 3 and performs error processing for displaying a message "user is not proper", for example (a step 106). Thereafter, the optical disk 3 is taken out from the disk drive unit 2 (a step 107).

A comparing operation when the user inherent information is the fingerprint image information, is disclosed in a paper entitled as "fingerprint inquiry method for confirming owner of IC card" by Tanaka et. al (NEC) at the national conference of the Institute of Electronics, Information and Communication Engineers of Japan in the autumn of 1988.

As described above, according to the embodiment, since a specific format is employed for the recorded data on the optical disk 3 and whether or not the user is a true owner is determined by comparing the comparison information with the user inherent information, only the true owner can reproduce the recorded data. Therefore, secret of the recorded data on the optical disk 3 can be kept.

Note that the image buffers 21 and 22 and the comparing means may be provided in a unit such as the host computer 1 except for the disk drive unit 2.

In addition, registration processing of the user inherent information into the information reference area is performs when the user purchase the optical disk 3, for example. The fingerprint or the like is input as the user inherent information from the image scanner 4 by a dealer or user and recorded on the optical disk 3 in response to a command from the host computer 1, for example.

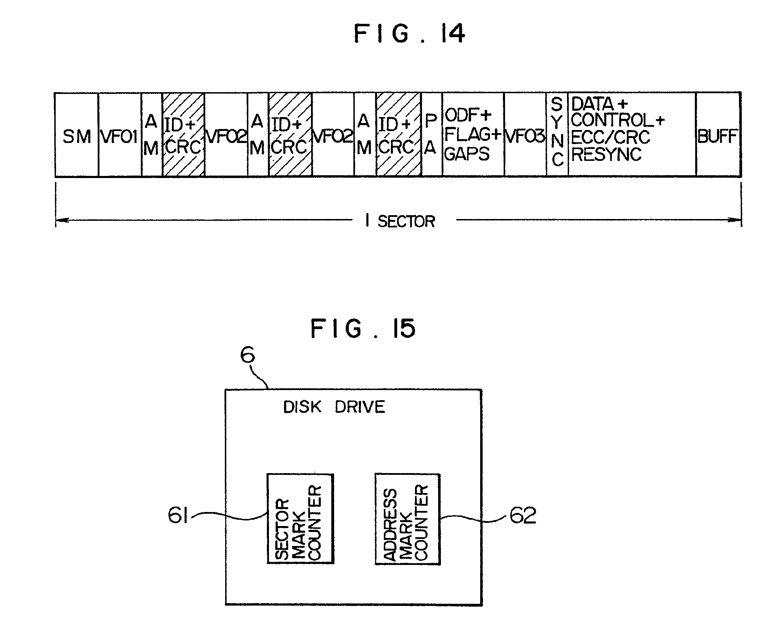

Next, another embodiment for realizing a data management method according to the present invention will be described below with reference to Figs. 14 and 15.

The recording medium such as a optical disk is generally of a rewritable type. As a result, when the photo disk is fraudulently used, data is overwritten on desired data recorded on the optical disk and hence there is a case where the desired data is changed or destroyed. From the above reason, there is a problem in that reliability of the recorded data is decreased. Specifically, it is necessary to increase the reliability of the recorded data as well as the secrecy of the data as to the recording medium for recording personal data. The reliability of the data is further more increased in this embodiment than in that in Fig. 12. For this purpose, in Fig. 13, since fraudulent use of the photo disk is performed when the comparison information does not coincide with the user inherent information, a trace of the fraudulent use is recorded on the photo disk in the error processing (the step 106).

Fig. 14 shows a sector format of the directory data area. Here, this is subject to "CONTINUOUS SERVO OPTICAL 512 BYTE SECTOR FORMAT".

In the error processing (the step 106) of Fig. 13, address data is destroyed wherein the address data represents a track number and a sector number, which are formatted in advance, in three "ID + CRC" blocks of a sector, in which the directory data is recorded, in one of every two directory data recording areas in the directory data area. The address data is recorded in a directory data recording area next to the directory data recording area for the address data to be destroyed. The above-mentioned operation is performed for the entire directory data area and then the above message "user is not proper" is output. The destruction of the ID blocks of the directory data on the photo disk can be performed by overwriting.

When the photo disk thus processed is inserted in the disk drive unit again, the directory data cannot be reproduced since the directory data cannot be correctly read out from the above directory data recording area of the directory data area. Therefore, it can be determined that the optical disk is fraudulently used.

On the other hand, user data, which secrecy must be kept, is generally recorded on one optical disk and the photo disk must be prepared such that it can be always used. For this purpose, the optical disk in which the address data is destroyed must not be destroyed without performing any processing, and data recorded on the photo disk must be copied to another optical disk, so that it can be used again.

Fig. 15 shows a definite example of the disk drive unit which can reproduce the user data from the photo disk whose data is destroyed as described above.

In the figure, the disk drive unit 6 is provided with a sector mark counter 61 and an address mark counter 62. when the optical disk processed as shown in Fig. 14 is inserted into the disk drive unit 6, a data recovering operation is first performed for the directory data area.

Even though a data reproduction operation is performed for the recording area whose address data is destroyed is recovered, any sector in the recording area cannot be determined. However, each sector in the next recording area can be determined since the address data is recorded in the next recording area. As described above, since the address data of the recording area immediately before the next recording area is recorded in this next recording area, this address data is read out. If the address data is now assumed to be 0010 to 0016 in decimal notation, the disk drive unit 6 reads out data on the same track. At this time, if the address data 0009 is read out from the not destroyed recording area, the sector mark counter 61 and address mark counter 62 are reset to be 0, respectively. Then, the destroyed recording area is recovered. For this purpose, the sector mark counter 62 is counted up by 1 each time a sector mark SM is detected in each sector shown in Fig. 14 and the address mark counter 61 is counted up by 1 each time an address mark AM is detected. These counts represents the address data of each sector. Now, if the count value of the sector mark counter 61 is 1 and the count value of the address mark counter 62 is 3, the sector is determined to have sector address data 0010. Similarly, the count value of the sector mark counter 61 is n ($1 \leq n \leq 10$) and the count value of the address mark counter 62 is 3n, it is determined to have address data (0010 + n). In this manner, address data of the destroyed sector can be recovered and the directory data can be reproduced from each recording area.

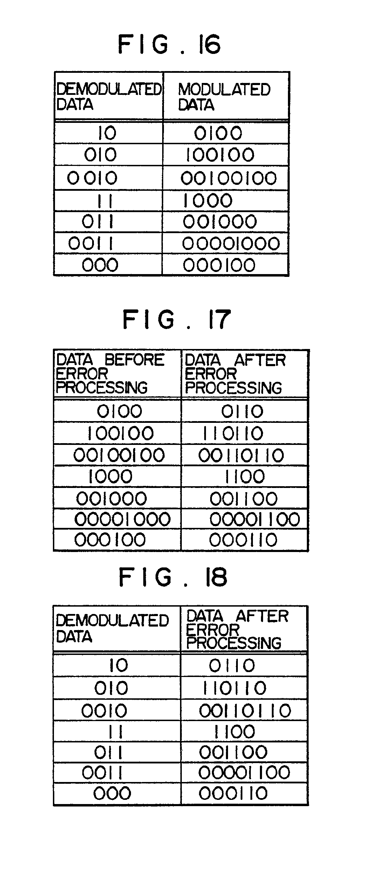

A seventh embodiment for realizing the data management method according to the present invention wherein reliability of recorded data on the optical disk can be increased, will be described below with reference to Figs. 16 to 18.

In this embodiment, directory data recorded in the directory data area is modulated such that it cannot be determined.

More specifically, the directory data recorded in the directory data area of the optical disk is destroyed in the error processing in Fig. 13 (the step 106). As a result, an address of image data in the user data area cannot be designated. As another example, data (modulation data) of a specific pattern is overwritten on the recorded directory data to modulate the directory data. As a result, the directory data can be read out but cannot be determined. In this case, the original directory data can be reproduced by using demodulation data of a specific pattern. Therefore, the directory data and the user data can be copied to another optical disk.

Modulation processing and demodulation processing for the directory data by using overwrite processing are shown in Figs. 16 to 18.

If the directory data is assumed to be subjected to 2-7 modulation processing, data of a pattern represented as modulated data is obtained by performing the 2-7 modulation processing for original data represented as demodulated data, as shown in Fig. 16. If the overwrite modulation processing is performed for the modulated data such that one "1" bit always follows to a "1" bit in the modulated data, data before the error processing as the modulated data is converted into data after the error processing, as shown in Fig. 17. The data after the error processing is no longer the modulated data obtained by performing the 2-7 modulation processing for the original data. Therefore, the data after the error processing cannot be reproduced with the result that the directory data cannot be determined.

In order to determine such data after the error processing, the demodulation processing must be performed, in which a bit next to a "1" bit following to a "0" bit is changed to a "0" bit. As a result, the original demodulated data can be reproduced from the data after the error processing, as shown in Fig. 18 and copied to another optical disk.

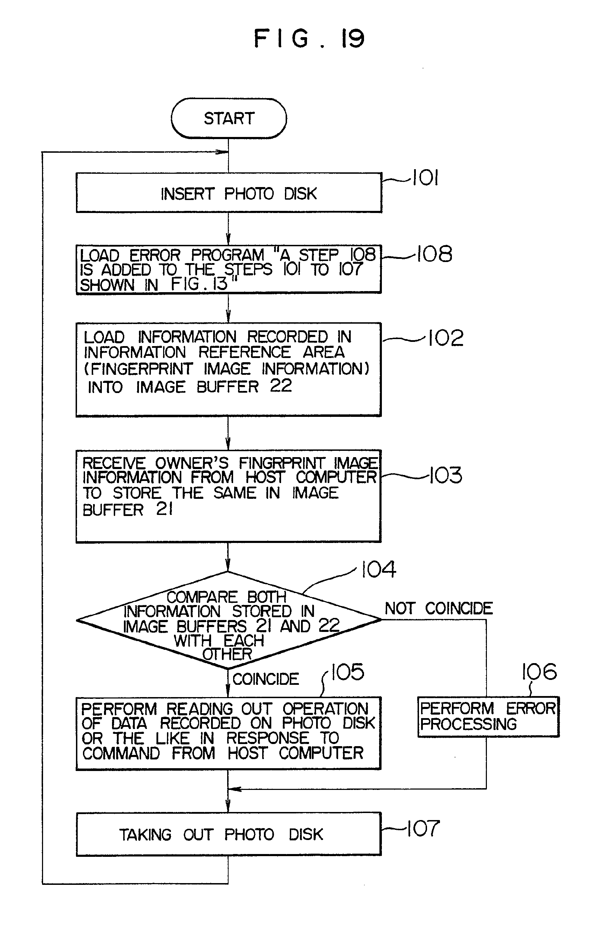

A program for destruction processing for the directory data or for the modulation processing by the overwrite processing, i.e., an error program may be provided in the disk drive unit but may be written in a specific area of the optical disk. In this case, as shown in Fig. 19, the error program is read out from the optical disk at a time when the optical disk is inserted in the disk drive unit (the step 101). The read out program is stored in an error processing table in the disk drive unit (a step 108). Thereafter, the same processing as that shown in Fig. 13 is performed. When the error processing is required (the step 106), the error processing is performed in accordance with the error program.

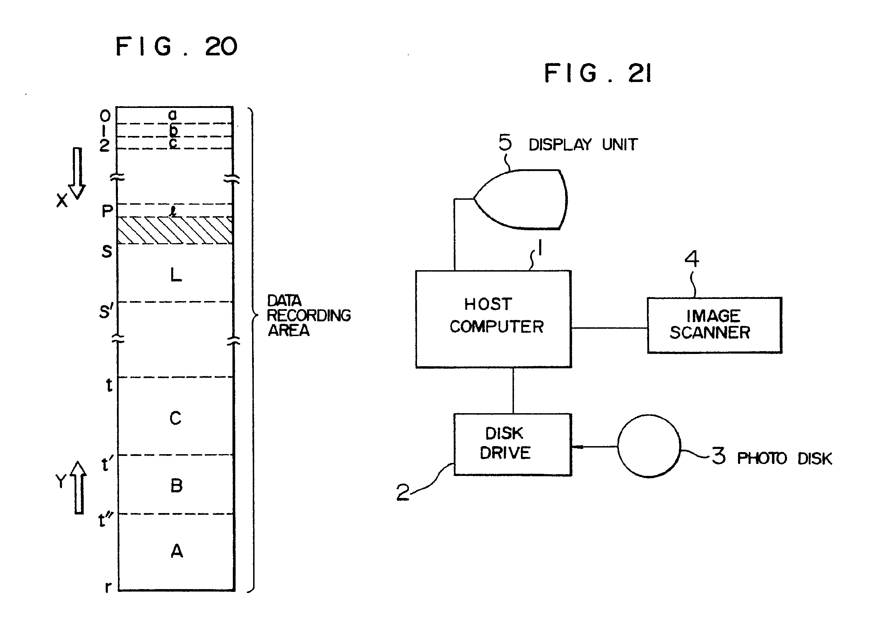

Fig. 20 shows an embodiment of the recording medium shown in Fig. 8 in an embodiment for realizing a data management method according to the present invention.

In the figure, if a head scanning direction in the data recording area on the disk is represented by an arrow mark X, addresses 0, 1, 2, ..., r are sequentially assigned to sectors in the data recording area in the arrow mark X direction. Therefore, the address 0 indicates a start sector of the data recording area and the address r indicates an end sector thereof. Here, it is assumed that one item of the directory data is written in one sector for purpose of simple description.

Items of the directory data are sequentially recorded on the data recording area from the start sector of the address 0 in the arrow mark X direction and files of image data are seqentially recorded from the end sector of the address r in an arrow mark Y direction opposite to the arrow mark X direction.

More specifically, when a file of the first image data A is recorded on the data recording area in which no data is recorded, an area having a length equal to a data length of the first image data A file is prepared in the data recording area such that a final portion of the image data A file corresponds to the end sector r. When an address of the first sector of the area is t" (= $r + 1 - Q_A$, where $Q_A$ is the data length of the image data A file), the image data A file is recorded in the area including the sectors of the addresses t" to r from the sector of the address t" in the arrow mark X direction. At the same time as the image data A file is recorded, an item of the directory data a corresponding to the image data A is recorded in the sector of the address 0.

In order to record a file of next image data B, an area having a length equal to a data length of the image data B file is prepared in the data recording area such that a final portion of the image data B file corresponds to a sector of an address $(t'' - 1)$ before the area of the image data A file by one. When an address of the first sector of the area is $t'$ $(= t'' - Q_A,$ where $Q_B$ is a data length of the image data B file), the image data B file is recorded in the area including the sectors of the addresses $t'$ to $(t' - 1)$ from the sector of the address $t'$ in the arrow mark X direction. At the same time as the image data B file is recorded, the an item of directory data b corresponding to the image data B is recorded in the sector of the address 1.

As described above, the image data files and the directory data items are sequentially recorded. When a file of image data L is recorded in an area of sectors of address S to S' - 1) and in item of directory data is recorded in a sector of an address P, record of image data in an area including sectors of addresses $(P + 1)$ to $(S - 1)$ is inhibited if a length of the area is shorter than a sum of data lengths of a file of the image data and an item of the directory data.

The area including the sectors of the addresses $(P + 1)$ to $(S - 1)$ is remained as an area not yet used. However, since the area is smaller than that necessary for recording a file of image data, the not yet used area can be considerably decreased, compared to a conventional data recording system in which an area larger than that necessary for recording the file of the image data is remained as an area not yet used. Therefore, the data recording area can be efficiently used.

Next, the embodiment will be described below in detail in a case where the disk is an optical disk, with reference to Figs. 21 to 23.

Fig. 21 is a block diagram showing an arrangement of an image data filing system which uses this embodiment and the same reference numerals are assigned to components corresponding to those shown in Fig. 1.

In the figure, the disk drive unit 2 is connected to the host computer 1 via an interface SCSI and performs a recording or reproducing operation of data for the optical disk 3 in response to a command from the host computer 1. The image scanner 4 is for inputting an image to be recorded. The input image is subjected to processing such as processing for converting it into digital image data by the host computer 1. The processing result is supplied to the disk drive unit 2 and recorded on the optical disk 3. When desired image data is to be reproduced, a file name of the image data is input by a user. The host computer 1 outputs a reproduction command to the disk drive unit 2 in response to the input of the file name. Directory data is read out from the optical disk 3 in response to the command and a file name in each item of the read out directory data is compared with the input file name. When both the file names coincide with each other, the disk drive unit 2 is commanded to perform the data reproducing operation from the optical disk in accordance with address data and data length data of the image data extracted from the item of the directory data having the same file name. The image data of a file having the file name thus read out is converted into an analog image signal and the image signal is supplied to the display unit 5 to display the image.

Fig. 22 shows a track pattern of the photo disk shown in Fig. 21.

In the figure, a spiral track 31 is formed on the optical disk 3 and divided into sectors. With an optical disk 3, a scanning direction of a head (not shown) is from an inner circle side toward an outer circle side and addresses are sequentially assigned to the sectors such that the addresses are sequentially incremented by one in the scanning direction. Here, an address of a sector includes a track number representing a circle in which the sector is present, which track number is different from another circle, and a sector number representing an order of the sector in the circle. For purpose of simple description, however, it is assumed that the sector address is incremented by one in the scanning direction.

Taking a 5.25 inch type of optical disk as an example, 17 sectors are provided for every circle of the track 31 and 16 sectors thereof are used for a data recording operation and the other sector is used for error processing. In this case, one sector has capacity of 512 bytes.

Such an optical disk will be described below as an example.

Addresses $(0000)_{16}$ to $(FFFF)_{16}$ in hexadecimal notation are assigned to a data recording area of the photo disk 3. The address $(0000)_{16}$ indicates a sector in a start portion of an inner circle, i.e., a start sector and the address $(FFFF)_{16}$ indicates a sector of an end portion of an outer circle thereof, i.e., and end sector.

Here, taking, as an example, a file of image data of a monochromatic multivalue image which has resolution of 512 dots (pixels) x 512 dots and has 256 gradation levels, one dot being composed of eight bits, as shown in Fig. 2, a data length of the image data is 512 x 512 x 8 bits = 262144 bytes and corresponds to for 512 sectors. One item of directory data is 32 bytes in long and corresponds to one sector.

It is assumed that the photo disk 3 is not yet used and the above image data file is recorded on the photo disk 3. Since $512 = (0200)_{16}$, a last sector of an area for the image data file to be recorded has an address $(FFFF)_{16}$ and an address of a first sector of the area is

$$(FFFF)_{16} + (0001)_{16} - (0200)_{16}$$
$$= (FE00)_{16}$$

That is, the image data file is recorded from the sector having the address $(FE00)_{16}$ to the sector having the address $(FFFF)_{16}$ in an outer cycle direction. At this time, an item of directory data corresponding to the image data is recorded in the start sector having the address $(0000)_{16}$. Such a recording operation is performed in response to a command from the host computer 1 (Fig. 21).

Next, when another file of image data having the same data length as the above image data is to be recorded, an area of 512 sectors is set for the another image data file and a last sector of the area is a sector having an address $(FE00)_{16} - (0001)_{16} = (FDFF)_{16}$. The first sector thereof has an address $(FE00)_{16} - (0200)_{16} = (FC00)_{16}$. Therefore, the another image data file is recorded from the sector having the address $(FC00)_{16}$ to the sector having the address $(FDFF)_{16}$ in the outer circle direction. At this time, an item of the directory data corresponding to the another image data file is recorded in a sector having an address $(0002)_{16}$.

Note that a position of the sector having the address $(FE00)_{16}$ is not correct with respect to the sector having the address $(FFFF)_{16}$ in Fig. 22. It is shown only for a purpose of convenience.

In this example, if all data lengths of files of image data are the same, 511 sectors are remained in a state not used since the number of sectors in the data recording area is $15^5$ and $16^5/513 = 2043$ (a remainder is 511).

In addition, in this example, one item of the directory data is recorded in one sector. However, when a plurality of files of the image data are continuously recorded, items of the directory data respectively corresponding to the plurality of files of the image data may be collectively recorded in the same sector. In the above example, since each item of the directory data is thirty-two bytes and one sector is 512 bytes, sixteen items (512/32) of the directory data can be recorded in one sector.

Note that values in the eighth embodiment are only as an example and the present invention, therefore, is not limited to the values.

In addition, a magnetic disk, a photomagnetic disk, or the like is available as the above disk, and data except for image data is available as information data.

CLAIMS

1.      In a method of managing data recorded on a
recording medium, a data management method comprising:

a step of setting an input recording scramble
parameter in a parameter buffer;

a step of performing scramble processing for
input data in accordance with said set recording
scramble parameter to record a result of the scramble
processing on said recording medium;

a step of setting an input reproduction
scramble parameter in said parameter buffer; and

a step of performing inverse scramble processing for said data read out from said recording medium
in accordance with said set reproduction scramble
parameter to reproduce original data.

2.      A data management method according to claim 1,
wherein said recording scramble parameter and said
reproduction scramble parameter are data representing
a feature of an owner of said recording medium.

3.      A data management method according to claim 1,
wherein said recording scramble parameter and said
reproduction scramble parameter are the same.

4.      In a method of managing data recorded on a
recording medium, a data management method comprising:

a step of storing a plurality of scramble
programs in a memory;

a step of performing scramble processing for
original data in accordance with any one of said plurality of scramble programs to record said data as a result of the scramble processing on said recording medium; and

a step of performing inverse scramble processing for said data read out from said recording medium in accordance with only the scramble program used in the scramble processing to reproduce said original data.

5.     In a method of managing data recorded on a recording medium, a data management method comprising:

a step of recording on said recording medium a plurality of scramble programs and said data which has been subjected to scramble processing in accordance with one of said plurality of scramble programs;

a step of reading out from said recording medium said scramble program used in the scramble processing; and

a step of performing inverse scramble processing for said data read out from said recording medium in accordance with said read out scramble program to reproduce original data.

6.     A data management method according to claim 5, wherein a secret identification number is assigned to each scramble program and said read out scramble program is designated in accordance with the secret identification number.

7.     In a data processing apparatus having a scramble table, a method of managing data recorded on a recording medium comprising:

a step of recording on said recording medium a scramble program and said data having been subjected scramble processing;

a step of reading out said scramble program from said recording medium to store said read out scramble program in said scramble table when desired data is to be reproduced from said recording medium; and

a step of performing inverse scramble processing for said data in said scramble table in accordance with said scramble program to reproduce said desired data.

8. A data management method according to claim 7, said scramble program is input from outside of the data processing apparatus and recorded on said recording medium.

9. A data management method according to claim 8, further comprising:

a step of reading out said scramble program from said recording medium to store said read out scramble program in said scramble table; and

a step of performing scramble processing for said desired data, which is input from the outside of the data processing apparatus, in said scramble table in accordance with said scramble program to record said data on said recording medium.

10. A data management method according to claim 7, wherein said recording medium has a user data area in which a user can arbitrarily record said desired data or from which the user can arbitrarily reproduce said desired data, said data in the user data area has been subjected to the scramble processing, and said scramble program used when the inverse scramble processing is performed for said data to reproduce said desired data is recorded in a position of said user data area which is arbitrarily designated by the user.

11. In a method of keeping secret of data recorded on an optical recording medium, a data management method comprising:

a step of recording said data on said optical recording medium to have a predetermined format;

a step of providing at least one information reference area in said optical recording medium to record information inherent to a user who uses said optical recording medium in said at least one information reference area;

a step of comparing said user inherent information read out from said optical recording medium with comparison information input from the outside of a system for reproducing original data from said data having said predetermined format; and

a step of enabling the system to reproduce the original data from said optical recording medium only when both information coincide with each other.

12. A data management method according to claim 11, wherein means for comparing said comparison information with said user inherent information is provided in a drive unit for said optical recording medium.

13.      A data management method according to claim 12, wherein said user inherent information is at least one of a handwriting, a fingerprint, a seal, a voiceprint, a photograph of user's face, a retina pattern and the like.

14.      A data management method according to claim 13, wherein said optical recording medium has a user data area in which user data required to keep the secret are recorded and a directory data area in which directory data corresponding to said user data are recorded, and said method further comprises a step of disabling said system from reproducing the directory data recorded in said directory data area when said user inherent information does not coincide with said comparison information.

15.      A data management method according to claim 14, further comprising a step of destroying items of address data recorded in said directory data area for every predetermined number to disable said system from reproducing the directory data.

16.      A data management method according to claim 15, further comprising a step of enabling said system to detect said destroyed address data items in accordance with the number of times detecting address sections from the address data items not destroyed.

17.      A data management method according to claim 11, wherein said optical recording medium has a user data area in which user data required to keep the secret are recorded and a directory data area in which directory data corresponding to said user data are recorded, and said method further comprises a step of disabling a read out operation of said directory data recorded in said directory data area when said user inherent information does not coincide with said comparison information.

18. A data management method according to claim 17, further comprising a step of modulating said directory data by overwriting predetermined pattern information on said directory data to disable the reading out operation of said directory data.

19. A data management method according to claim 18, further comprising a step of enabling said modulated directory data to be demodulated in accordance with a predetermined demodulation code.

20. A data management method according to claim 17, further comprising a step of recording a program for disabling the reading out operation of said directory data in a specific area of said optical recording medium.

21. A data management method according to claim 17, wherein many items of said information data and items of said directory data corresponding to the items of the information data are recorded on said disk-like recording medium, and said method further comprises:

a step of sequentially recording the items of said directory data from a start position of a data recording area on said disk-like recording medium in a head scanning direction; and

a step of sequentially recording the items of said information data an end position of said data recording area on said disk-like recording medium in the head scanning direction.

22.    A data management method according to claim 21, wherein said information data and said directory data are recorded on said disk-like recording medium, said directory data and said information data are densely recorded from the start position and the end position of said data recording area on said disk-like recording medium in the head scanning direction, respectively.

# FIG. 1

5 DISPLAY UNIT

HOST COMPUTER

111 — PARA. BUFFER

11 — SCRAMBLE TABLE

4

IMAGE SCANNER

2 — DISK DRIVE

3 PHOTO DISK

# FIG. 2

8 BIT

512 DOTS

512 DOTS

# FIG. 3

| $\overbrace{\hspace{2.5em}}^{3}$ | | | | $\overbrace{\hspace{2.5em}}^{4}$ | | | | $\overbrace{\hspace{2.5em}}^{5}$ | | | |
|---|---|---|---|---|---|---|---|---|---|---|---|
| O | O | I | I | O | I | O | O | O | I | O | I |
| $D_{11}$ | $D_{10}$ | $D_9$ | $D_8$ | $D_7$ | $D_6$ | $D_5$ | $D_4$ | $D_3$ | $D_2$ | $D_1$ | $D_0$ |

# FIG. 4

MSB             LSB

(a) | $a_7$ | $a_6$ | $a_5$ | $a_4$ | $a_3$ | $a_2$ | $a_1$ | $a_0$ |

(b) | $a_4$ | $a_3$ | $a_2$ | $a_1$ | $a_0$ | $a_7$ | $a_6$ | $a_5$ |

(c) | $a_4$ | $a_3'$ | $a_2$ | $a_1$ | $a_0$ | $a_7'$ | $a_6$ | $a_5'$ |

$$a_i' = \overline{a_i} \qquad (i = 3, 5, 7)$$

# F I G . 5

5 DISPLAY UNIT

1 HOST COMPUTER

4

IMAGE SCANNER

SCRAMBLE MEMORY 12

11 SCRAMBLE TABLE

DISK DRIVE

2

3 PHOTO DISK

# FIG. 6

(a)

MSB                  LSB

| $D_7$ | $D_6$ | $D_5$ | $D_4$ | $D_3$ | $D_2$ | $D_1$ | $D_0$ |
|---|---|---|---|---|---|---|---|

(b)

MSB                  LSB

| $D_7'$ | $D_6'$ | $D_5'$ | $D_4'$ | $D_3'$ | $D_2'$ | $D_1'$ | $D_0'$ |
|---|---|---|---|---|---|---|---|

$(D_3)$ $(D_2)$ $(D_1)$ $(D_0)$ $(D_7)$ $(D_6)$ $(D_5)$ $(D_4)$

# FIG. 7

| 3 | | | | 4 | | | | 5 | | | |
|---|---|---|---|---|---|---|---|---|---|---|---|
| 0 | 0 | 1 | 1 | 0 | 1 | 0 | 0 | 0 | 1 | 0 | 1 |

$D_{11}$ $D_{10}$ $D_9$ $D_8$ $D_7$ $D_6$ $D_5$ $D_4$ $D_3$ $D_2$ $D_1$ $D_0$

# FIG. 8

(a)

MSB                  LSB

| $a_7$ | $a_6$ | $a_5$ | $a_4$ | $a_3$ | $a_2$ | $a_1$ | $a_0$ |
|---|---|---|---|---|---|---|---|

(b)

| $a_4$ | $a_3$ | $a_2$ | $a_1$ | $a_0$ | $a_7$ | $a_6$ | $a_5$ |
|---|---|---|---|---|---|---|---|

(c)

| $a_4$ | $a_3'$ | $a_2$ | $a_1$ | $a_0$ | $a_7'$ | $a_6$ | $a_5'$ |
|---|---|---|---|---|---|---|---|

$$a_i' = \overline{a_i} \quad (i = 3, 5, 7)$$

# F I G . 9

5

11

4

I′

HOST
COMPUTER

IMAGE
SCANNER

DISK DRIVE

2

3′ PHOTO DISK

# FIG. 10

HOST COMPUTER

IMAGE SCANNER

SCRAMBLE TABLE

DISK DRIVE

3 PHOTO DISK

# FIG. 11

SCRAMBLE PROGRAM

0          AA          10000

DIRECTORY DATA AREA

USER DATA AREA

# FIG. 12

# F I G . 13

```
        ┌─────────────┐
        │    START    │
        └─────────────┘
               │
        ┌──────────────────────┐
        │ INSERT PHOTO DISK    │──── 101
        └──────────────────────┘
               │
   ┌──────────────────────────────────┐
   │ LOAD INFORMATION RECORDED IN     │
   │ INFORMATION REFERENCE AREA       │──── 102
   │ (FINGERPRINT IMAGE INFORMATION)  │
   │ INTO IMAGE BUFFER 22             │
   └──────────────────────────────────┘
               │
   ┌──────────────────────────────────┐
   │ RECEIVE OWNER'S FINGRPRINT IMAGE │
   │ INFORMATION FROM HOST COMPUTER   │──── 103
   │ TO STORE THE SAME IN IMAGE       │
   │ BUFFER 21                        │
   └──────────────────────────────────┘
               │
         COMPARE BOTH                 104
      INFORMATION STORED IN
      IMAGE BUFFERS 21 AND 22    NOT COINCIDE
           WITH EACH
            OTHER
       COINCIDE    105                      106
   ┌──────────────────────────────┐   ┌──────────────────┐
   │ PERFORM READING OUT OPERATION│   │ PERFORM ERROR    │
   │ OF DATA RECORDED ON PHOTO DISK│  │ PROCESSING       │
   │ OR THE LIKE IN RESPONSE TO   │   └──────────────────┘
   │ COMMAND FROM HOST COMPUTER   │
   └──────────────────────────────┘
               │
   ┌──────────────────────────┐
   │ TAKING OUT PHOTO DISK    │──── 107
   └──────────────────────────┘
```

# FIG. 14

| SM | VFO1 | A M | ID+ CRC | VFO2 | A M | ID+ CRC | VFO2 | A M | ID+ CRC | P A | ODF+ FLAG+ GAPS | VFO3 | S Y N C | DATA+ CONTROL+ ECC/CRC RESYNC | BUFF |
|----|------|-----|---------|------|-----|---------|------|-----|---------|-----|-----------------|------|---------|-------------------------------|------|

$\longleftarrow$ I SECTOR $\longrightarrow$

# FIG. 15

6

```
┌─────────────────────────────────┐
│          DISK  DRIVE            │
│                                 │
│   ┌──────────┐   ┌──────────┐   │
│61 │ SECTOR   │   │ ADDRESS  │ 62│
│   │ MARK     │   │ MARK     │   │
│   │ COUNTER  │   │ COUNTER  │   │
│   └──────────┘   └──────────┘   │
│                                 │
└─────────────────────────────────┘
```

EP 0 396 774 A1

## FIG. 16

| DEMODULATED DATA | MODULATED DATA |
|---|---|
| 10 | 0100 |
| 010 | 100100 |
| 0010 | 00100100 |
| 11 | 1000 |
| 011 | 001000 |
| 0011 | 00001000 |
| 000 | 000100 |

## FIG. 17

| DATA BEFORE ERROR PROCESSING | DATA AFTER ERROR PROCESSING |
|---|---|
| 0100 | 0110 |
| 100100 | 110110 |
| 00100100 | 00110110 |
| 1000 | 1100 |
| 001000 | 001100 |
| 00001000 | 00001100 |
| 000100 | 000110 |

## FIG. 18

| DEMODULATED DATA | DATA AFTER ERROR PROCESSING |
|---|---|
| 10 | 0110 |
| 010 | 110110 |
| 0010 | 00110110 |
| 11 | 1100 |
| 011 | 001100 |
| 0011 | 00001100 |
| 000 | 000110 |

# F I G . 19

```
                    ┌─────────┐
                    │  START  │
                    └─────────┘
                         │
    ┌────────────────────┼─────────────────────────┐
    │                    ▼                          │
    │   ┌──────────────────────────────────┐        │
    │   │       INSERT PHOTO DISK          │─── 101 │
    │   └──────────────────────────────────┘        │
    │                    │                          │
    │                    ▼                          │
    │   ┌──────────────────────────────────┐        │
    │   │ LOAD ERROR PROGRAM "A STEP 108   │─── 108 │
    │   │ IS ADDED TO THE STEPS 101 TO 107 │        │
    │   │ SHOWN IN FIG.13"                 │        │
    │   └──────────────────────────────────┘        │
    │                    │                          │
    │                    ▼                          │
    │   ┌──────────────────────────────────┐        │
    │   │ LOAD INFORMATION RECORDED IN     │─── 102 │
    │   │ INFORMATION REFERENCE AREA       │        │
    │   │ (FINGERPRINT IMAGE INFORMATION)  │        │
    │   │ INTO IMAGE BUFFER 22             │        │
    │   └──────────────────────────────────┘        │
    │                    │                          │
    │                    ▼                          │
    │   ┌──────────────────────────────────┐        │
    │   │ RECEIVE OWNER'S FINGRPRINT IMAGE │─── 103 │
    │   │ INFORMATION FROM HOST COMPUTER   │        │
    │   │ TO STORE THE SAME IN IMAGE       │        │
    │   │ BUFFER 21                        │        │
    │   └──────────────────────────────────┘        │
    │                    │                          │
```

INSERT PHOTO DISK — 101

LOAD ERROR PROGRAM "A STEP 108 IS ADDED TO THE STEPS 101 TO 107 SHOWN IN FIG.13" — 108

LOAD INFORMATION RECORDED IN INFORMATION REFERENCE AREA (FINGERPRINT IMAGE INFORMATION) INTO IMAGE BUFFER 22 — 102

RECEIVE OWNER'S FINGRPRINT IMAGE INFORMATION FROM HOST COMPUTER TO STORE THE SAME IN IMAGE BUFFER 21 — 103

COMPARE BOTH INFORMATION STORED IN IMAGE BUFFERS 21 AND 22 WITH EACH OTHER — 104

NOT COINCIDE

COINCIDE

PERFORM READING OUT OPERATION OF DATA RECORDED ON PHOTO DISK OR THE LIKE IN RESPONSE TO COMMAND FROM HOST COMPUTER — 105

PERFORM ERROR PROCESSING — 106

TAKING OUT PHOTO DISK — 107

# FIG. 20

DATA RECORDING AREA

# FIG. 21

5 DISPLAY UNIT

HOST COMPUTER

4 IMAGE SCANNER

DISK DRIVE

3 PHOTO DISK

2

EP 0 396 774 A1

EP 0 396 774 A1

# FIG. 22

$(FFFF)_{16}$

$(0000)_{16}$

ROTATED

3

31

$(FE00)_{16}$

# FIG. 23

O
a
I
b

DIRECTORY DATA AREA

P-I
k
P
A
P'
B
P''
q
K
q'
r

INFORMATION DATA AREA

# INTERNATIONAL SEARCH REPORT

International Application No PCT/JP89/01100

## I. CLASSIFICATION OF SUBJECT MATTER (if several classification symbols apply, indicate all) [6]

According to International Patent Classification (IPC) or to both National Classification and IPC

Int. Cl$^4$  G06F3/06 - 3/08, 12/14

## II. FIELDS SEARCHED

### Minimum Documentation Searched [7]

| Classification System | Classification Symbols |
|---|---|
| IPC | G06F3/06 - 3/08, 9/06, 12/14, G06K17/00, G09C1/00 |

Documentation Searched other than Minimum Documentation
to the Extent that such Documents are Included in the Fields Searched [8]

## III. DOCUMENTS CONSIDERED TO BE RELEVANT [9]

| Category [*] | Citation of Document, [11] with indication, where appropriate, of the relevant passages [12] | Relevant to Claim No. [13] |
|---|---|---|
| Y | JP, A, 63-184858 (Toshiba Corp.) 30 July 1988 (30. 07. 88) (Family : none) | 1 - 10 |
| Y | JP, A, 63-106833 (Hitachi, Ltd.) 11 May 1988 (11. 05. 88) (Family : none) | 1 - 10 |
| Y | JP, A, 63-24339 (Omron Tateisi Electronics Co.) 1 February 1988 (01. 02. 88) (Family : none) | 1 - 10 |
| Y | JP, A, 60-73742 (Pioneer Electric Corporation) 25 April 1985 (25. 04. 85) (Family : none) | 1 - 10 |
| Y | JP, A, 57-48768 (Toshiba Corp.) 20 March 1982 (20. 03. 82) (Family : none) | 1 - 10 |
| Y | JP, A, 51-6628 (Hitachi, Ltd.) 20 January 1976 (20. 01. 76) (Family : none) | 1 - 10 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| December 7, 1989 (07. 12. 89) | December 18, 1989 (18. 12. 89) |

| International Searching Authority | Signature of Authorized Officer |
|---|---|
| Japanese Patent Office | |

Form PCT ISA 210 (second sheet) (January 1985)

FURTHER INFORMATION CONTINUED FROM THE SECOND SHEET

| | | |
|---|---|---|
| Y | JP, A, 60-114930 (Toshiba Corp.)<br>21 June 1985 (21. 06. 85) (Family : none) | 11 - 22 |
| Y | JP, A, 63-240686 (Toshiba Corp.)<br>6 October 1988 (06. 10. 88) (Family : none) | 13 |
| Y | JP, A, 63-175986 (Toshiba Corp.)<br>20 July 1988 (20. 07. 88) (Family : none) | 13 |
| Y | JP, A, 58-56061 (Fujitsu Ltd.)<br>2 April 1983 (02. 04. 83) (Family : none) | 13 |
| Y | JP, A, 58-109953 (Fujitsu Ltd.)<br>30 June 1983 (30. 06. 83) (Family : none) | 14 |

V.☐ OBSERVATIONS WHERE CERTAIN CLAIMS WERE FOUND UNSEARCHABLE [1]

This international search report has not been established in respect of certain claims under Article 17(2) (a) for the following reasons:

1.☐ Claim numbers         , because they relate to subject matter not required to be searched by this Authority, namely:

2.☐ Claim numbers         , because they relate to parts of the international application that do not comply with the prescribed requirements to such an extent that no meaningful international search can be carried out, specifically:

3.☐ Claim numbers ..... . , because they are dependent claims and are not drafted in accordance with the second and third sentences of PCT Rule 6.4(a).

VI.☐ OBSERVATIONS WHERE UNITY OF INVENTION IS LACKING [2]

This International Searching Authority found multiple inventions in this international application as follows:

1.☐ As all required additional search fees were timely paid by the applicant, this international search report covers all searchable claims of the international application.

2.☐ As only some of the required additional search fees were timely paid by the applicant, this international search report covers only those claims of the international application for which fees were paid, specifically claims:

3.☐ No required additional search fees were timely paid by the applicant. Consequently, this international search report is restricted to the invention first mentioned in the claims; it is covered by claim numbers:

4.☐ As all searchable claims could be searched without effort justifying an additional fee, the International Searching Authority did not invite payment of any additional fee.

Remark on Protest

☐ The additional search fees were accompanied by applicant's protest.

☐ No protest accompanied the payment of additional search fees.

Form PCT/ISA/210 (supplemental sheet (2)) (January 1985)

**FURTHER INFORMATION CONTINUED FROM THE SECOND SHEET**

| | | |
|---|---|---|
| Y | JP, A, 59-60464 (Toshiba Corp.)<br>6 April 1984 (06. 04. 84)<br>& EP, A, 105241 | 1-10, 18-19 |
| Y | JP, A, 62-276648 (Toshiba Corp.)<br>1 December 1987 (01. 12. 87)<br>(Family : none) | 11 - 22 |
| Y | JP, A, 60-123948 (NEC Corporation)<br>2 July 1985 (02. 07. 85)<br>(Family : none) | 11 - 22 |

**V.☐ OBSERVATIONS WHERE CERTAIN CLAIMS WERE FOUND UNSEARCHABLE** [1]

This international search report has not been established in respect of certain claims under Article 17(2) (a) for the following reasons:

1.☐ Claim numbers . . . , because they relate to subject matter not required to be searched by this Authority, namely:

2.☐ Claim numbers . . , because they relate to parts of the international application that do not comply with the prescribed requirements to such an extent that no meaningful international search can be carried out, specifically:

3.☐ Claim numbers . . . . , because they are dependent claims and are not drafted in accordance with the second and third sentences of PCT Rule 6.4(a).

**VI.☐ OBSERVATIONS WHERE UNITY OF INVENTION IS LACKING** [2]

This International Searching Authority found multiple inventions in this international application as follows:

1.☐ As all required additional search fees were timely paid by the applicant, this international search report covers all searchable claims of the international application.

2.☐ As only some of the required additional search fees were timely paid by the applicant, this international search report covers only those claims of the international application for which fees were paid, specifically claims:

3.☐ No required additional search fees were timely paid by the applicant. Consequently, this international search report is restricted to the invention first mentioned in the claims; it is covered by claim numbers:

4.☐ As all searchable claims could be searched without effort justifying an additional fee, the International Searching Authority did not invite payment of any additional fee.

Remark on Protest

☐ The additional search fees were accompanied by applicant's protest.

☐ No protest accompanied the payment of additional search fees.

Form PCT/ISA/210 (supplemental sheet (2)) (January 1985)

| FURTHER INFORMATION CONTINUED FROM THE SECOND SHEET | |
|---|---|
| Y    JP, A, 58-56546 (Fujitsu Ltd.) <br> 4 April 1983 (04. 04. 83) (Family : none) | 14 |
| Y    JP, A, 59-94157 (Fujitsu Ltd.) <br> 30 May 1984 (30. 05. 84) (Family : none) | 21 - 22 |

**V.☐ OBSERVATIONS WHERE CERTAIN CLAIMS WERE FOUND UNSEARCHABLE [1]**

This international search report has not been established in respect of certain claims under Article 17(2) (a) for the following reasons:

1.☐ Claim numbers    , because they relate to subject matter not required to be searched by this Authority, namely:

2.☐ Claim numbers    , because they relate to parts of the international application that do not comply with the prescribed requirements to such an extent that no meaningful international search can be carried out, specifically:

3.☐ Claim numbers    , because they are dependent claims and are not drafted in accordance with the second and third sentences of PCT Rule 6.4(a).

**VI.☐ OBSERVATIONS WHERE UNITY OF INVENTION IS LACKING [2]**

This International Searching Authority found multiple inventions in this international application as follows:

1.☐ As all required additional search fees were timely paid by the applicant, this international search report covers all searchable claims of the international application.

2.☐ As only some of the required additional search fees were timely paid by the applicant, this international search report covers only those claims of the international application for which fees were paid, specifically claims:

3.☐ No required additional search fees were timely paid by the applicant. Consequently, this international search report is restricted to the invention first mentioned in the claims; it is covered by claim numbers:

4.☐ As all searchable claims could be searched without effort justifying an additional fee, the International Searching Authority did not invite payment of any additional fee.

Remark on Protest

☐ The additional search fees were accompanied by applicant's protest

☐ No protest accompanied the payment of additional search fees

Form PCT/ISA/210 (supplemental sheet (2)) (January 1985)